(19) **Europäisches Patentamt**
**European Patent Office**
**Office européen des brevets**

(11) **EP 4 296 507 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **22180742.3**

(22) Anmeldetag: **23.06.2022**

(51) Internationale Patentklassifikation (IPC):
*F03D 17/00* *(2016.01)*

(52) Gemeinsame Patentklassifikation (CPC):
**F03D 17/006; F03D 17/011; F03D 17/025;**
F05B 2270/331; F05B 2270/808; Y02E 10/72

(54) **VERFAHREN ZUM PARAMETRIEREN EINER SENSORANORDNUNG AUS MEHREREN LASTSENSOREN EINES ROTORBLATTES EINER WINDENERGIEANLAGE**

METHOD FOR CONTROLLING THE PARAMETERS OF A SENSOR ARRANGEMENT COMPRISING A PLURALITY OF LOAD SENSORS OF A ROTOR BLADE OF A WIND TURBINE

PROCÉDÉ DE PARAMÉTRAGE D'UN ENSEMBLE CAPTEUR COMPOSÉ D'UNE PLURALITÉ DE CAPTEURS DE CHARGE D'UNE PALE DE ROTOR D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.12.2023 Patentblatt 2023/52**

(73) Patentinhaber: **Wobben Properties GmbH**
**26607 Aurich (DE)**

(72) Erfinder:
• **Bunge, Frank**
**67063 Ludwigshafen (DE)**

• **Kretschmer, Stephan**
**25579 Fitzbek (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 2 431 607          EP-A1- 3 141 746**
**US-A1- 2017 292 501     US-A1- 2019 010 923**

**Beschreibung**

Die Erfindung betrifft ein Verfahren zum Parametrieren einer Sensoranordnung aus mehreren Lastsensoren eines Rotorblattes eines Rotors einer Windenergieanlage. Die Erfindung ist ebenfalls auf eine entsprechende Windenergieanlage gerichtet, in der ein solches Verfahren implementiert ist.

Durch Rotation des Rotors erzeugen Windenergieanlagen elektrische Leistung aus Wind. Dabei ist der Rotor, insbesondere die Rotorblätter, aufgrund des Windes starken Belastungen ausgesetzt. So greifen beispielsweise Auftriebskräfte an, die abhängig von der Windgeschwindigkeit, Windrichtung, Ausrichtung des Rotors und Blattwinkel der Rotorblätter variieren können.

Für einen sicheren Betrieb, ist es sinnvoll, die Belastungen zu bestimmen, um rechtzeitig reagieren zu können, wenn die Belastungen zu groß werden. Die Windenergieanlage kann dann bei reduzierter Drehzahl und Leistung weiter betrieben werden oder notfalls abgeschaltet werden. Aus aufgenommenen Belastungen können aber auch Abschätzungen der zu erwartenden Lebensdauer abgeleitet werden.

Besonders bei Windenergieanlagen mit Einzelblattverstellung, bei der die Rotorblätter individuell in ihrem Blattwinkel eingestellt werden können, ist es ratsam, auftretende Belastungen zu bestimmen. Derartige Windenergieanlagen ermöglichen es, das Rotorblatt während einer Umdrehung des Rotors individuell einzustellen und zu jeder Zeit das Rotorblatt optimal für eine Leistungsmaximierung entsprechend der Windrichtung auszurichten. Die Rotorblätter können dabei individuelle Belastungen erfahren.

Da die auftretenden Belastungen aus unterschiedlichen Richtungen angreifen können, ist es üblich, die Belastung auf die Rotorblätter in wenigstens zwei Richtungen zu messen.

Bekannte Verfahren verwenden dazu üblicherweise vier Sensoren. Dabei bilden jeweils zwei Sensoren ein Sensorpaar und zwei Sensoren eines solchen Sensorpaares sind auf gegenüberliegenden Seiten des Rotorblattes angebracht. Nachteilhaft an dieser Messmethode ist, dass bei der Positionierung der Sensoren auf eine genaue Ausrichtung geachtet werden muss. Das erschwert das Anbringen der Sensoren und führt zu Messungenauigkeiten bei fehlerhaft vorgenommener Positionierung. Zudem führt die Verwendung von vier Sensoren pro Rotorblatt zu entsprechend hohen Kosten.

Auch Verfahren zur Messung von Belastungen auf Rotorblättern mit drei Sensoren sind bekannt, wie zum Beispiel in EP 3 317 513 B1.

Das Einstellen bzw. Kalibrieren der Sensoren erfolgt gemäß EP 3 317 513 B1 individuell. Das hat jedoch den Nachteil, dass jede Einstellung bzw. Kalibrierung für sich sehr genau erfolgen muss und dabei Details wie die Sensorposition sehr genau bekannt sein muss, oder zusätzlich genau erfasst werden muss. Das Verfahren ist somit fehleranfällig.

Das Dokument EP 2 431 607 A1 betrifft eine Erfindung die eine Last basierend auf Daten kalibriert, die unter breiten Beobachtunsbedingungen gesammelt wurden und die Lasten einer Vielzahl von Windturbinenblättern zeitnah kalibrieren.

Das Dokument US 2019/010923 A1 beschreibt ein Datenverarbeitungs- und Steuerungserweiterungssystem, das in der Lage ist, eine Überlastung einer oder mehrerer Windturbinenbaugruppen und Informationen an eine Windparksteuerung zu liefern, um die eine Leistungsabgabe jeder überlasteten Turbine zu reduzieren.

Das Dokument EP 3 141 746 A1 beschreibt ein Verfahren zum Kalibrieren einer Lastmessvorrichtung zum Messen einer Last an einem Windturbinenrotorblatt auf der Basis von Dehnungsdaten basierend auf einer Dehnung de Windturbinenrotorblätter.

Aufgabe der Erfindung ist es, eines der zuvor genannten Probleme zu adressieren. Insbesondere soll eine Lösung vorgeschlagen werden, gemäß der für Lastsensoren eine möglichst genaue und möglichst wenig fehleranfällige Einstellung vorgeschlagen wird, als Voraussetzung zum Verwenden der Lastsensoren. Wenigstens soll eine Alternative zu bekannten Verfahren vorgeschlagen werden.

Erfindungsgemäß wird ein Verfahren nach Anspruch 1 vorgeschlagen. Dieses betrifft somit ein Parametrieren einer Sensoranordnung aus mehreren Lastsensoren eines Rotorblattes eines Rotors einer Windenergieanlage zum Erfassen wenigstens einer Lastgröße.

Die Windenergieanlage weist somit einen Rotor mit wenigstens einem Rotorblatt, insbesondere mit drei Rotorblättern auf.

Jedes Rotorblatt ist mit einer Sensoranordnung aus wenigstens drei Lastsensoren ausgestattet. Diese sind besonders an der Oberfläche des Rotorblattes im Bereich der Blattwurzel angeordnet. Hier hat das Rotorblatt einen im Wesentlichen runden Umfang. Bei drei Lastsensoren können diese im Idealfall auf dem Umfang um ca. 120° zueinander versetzt angeordnet sein, um Lasten in unterschiedlichen Richtungen aufnehmen zu können.

Es können auch mehrere Lastsensoren vorgesehen sein. Eine gleichmäßige Verteilung der Lastsensoren, wie die Verteilung um ca. 120° bei drei Lastsensoren, ist anzustreben, aber geringe Abweichungen können toleriert werden.

Jeder der Lastsensoren nimmt eine von der Last abhängige physikalische Größe des Rotorblattes auf und gibt eine dazu repräsentative Größe als erfasste Sensorgröße aus. Besonders kann ein Lastsensor eine Längenänderung als physikalische Größe des Rotorblattes aufnehmen und dazu, z.B. proportional, eine elektrische Spannungsamplitude als Sensorgröße ausgeben. Ebenso kann die Sensorgröße einfach eine vorverarbeitete Zahl sein, die proportional zur physikalischen Größe ist.

Die als Sensorgröße ausgegebene Spannung, um bei diesem Bsp. zu bleiben, ist also repräsentativ für die aufgenommene Längenänderung. Aus der Längenänderung kann ein Biegemoment des Rotorblattes berechnet bzw. interpretiert werden. Das ist hier auch möglich, es wird aber vorgeschlagen, die Sensoranordnung insgesamt zu betrachten und auch die Sensorsignale der Sensoranordnung zusammen zu berücksichtigen, um das Biegemoment zu berechnen.

Zum Berechnen der wenigstens einen Lastgröße aus den Sensorgrößen wird somit wenigstens eine Gesamtberechnungsvorschrift verwendet, insbesondere nämlich eine für jede Lastgröße. Die Gesamtberechnungsvorschrift bildet einen Zusammenhang zwischen den erfassten Sensorgrößen aller Lastsensoren und der wenigstens einen Lastgröße des Rotorblattes. Die Gesamtberechnungsvorschrift weist dazu mehrere Berechnungsparameter auf. Besonders ist vorgesehen, zwei Lastgrößen zu berechnen, nämlich zwei Biegemomente, jeweils in unterschiedliche Richtungen.

Die Lastgröße wird somit gemäß der Gesamtberechnungsvorschrift berechnet. Die einzelnen aufgenommenen Sensorgrößen werden direkt anhand der Gesamtberechnungsvorschrift in die Lastgröße umgerechnet. Die Gesamtberechnungsvorschrift berücksichtigt somit einen Gesamtzusammenhang.

Je nachdem, welche Lastgröße bestimmt werden soll, also z.B. ob ein Biegemoment in eine Schlagrichtung oder ein Biegemoment in eine Schwenkrichtung berechnet werden soll, kann eine andere Gesamtberechnungsvorschrift herangezogen, bzw. andere Berechnungsparameter verwendet werden. Es ist aber auch möglich, mehrere Gesamtberechnungsvorschriften zusammenzufassen, vorzugsweise wird aber für jede Lastgröße eine eigene Gesamtberechnungsvorschrift verwendet.

Der Gesamtberechnungsvorschrift liegt zunächst die Theorie zu Grunde, dass für jeden Sensor einzeln aus der physikalischen Größe, also bspw. der Längenänderung, eine zugehörige Lastkomponente, also z.B. ein Biegemoment in Messrichtung des Sensors, durch entsprechende Parameterwahl berechnet werden kann. Diese Berechnungen der einzelnen Sensoren werden, vereinfacht ausgedrückt, in der Gesamtberechnungsvorschrift zusammengefasst, um dadurch auch andere Messrichtungen zu berücksichtigen.

Tatsächlich können die Berechnungsparameter in der Gesamtberechnungsvorschrift nicht mehr einem Verhältnis zwischen Lastgröße (Biegemoment) und aufgenommener physikalischer Größe (Längenänderung am Sensor) zugeordnet werden, jedenfalls nicht quantitativ. Stattdessen kommt es bei der Gesamtberechnungsvorschrift und ihren Berechnungsparametern nur darauf an, dass unter Berücksichtigung der physikalischen Größen (Längenänderungen) aller Lastsensoren insgesamt die Lastgröße (Biegemoment in eine Richtung) berechnet wird. Die einzelnen Berechnungsparameter dieser Gesamtberechnungsvorschrift sind dann nicht mehr physikalisch interpretierbar, weswegen sie als Berechnungsparameter bezeichnet werden.

Die Berechnungsparameter sind daher auch abhängig von der Anzahl und Anordnung der Lastsensoren. Wenn man, um es an einem Bsp. zu veranschaulichen, zu einer existierenden Sensoranordnung einen Sensor ergänzt, müssen die vorhandenen Berechnungsparameter kleiner werden, da sonst der ergänzte Sensor zu einer höheren berechneten Lastgröße führen würde (oder der ergänzte Sensor gar keinen Einfluss hätte).

Zum Parametrieren der Sensoranordnung werden nun die Berechnungsparameter der Gesamtberechnungsvorschrift unter gleichzeitiger Berücksichtigung von erfassten Sensorgrößen aller Lastsensoren bestimmt.

Die Lastsensoren werden somit nicht einzeln eingestellt, sondern gemeinsam. Damit wird diese Gesamtberechnungsvorschrift parametriert, bei der es nur auf den Zusammenhang zwischen den vielen Eingangsgrößen, nämlich den Sensorgrößen, und der Ausgangsgröße, der Lastgröße, ankommt. Parametrierungen einzelner Sensoren werden vermieden. Damit spielen auch Details der einzelnen Sensoren, wie ihre exakte Anordnung, keine Rolle mehr, oder zumindest nur noch eine geringere Rolle, als bei der Einzelbetrachtung.

Insbesondere wird vorgeschlagen, dass das Parametrieren der Sensoranordnung, zumindest jeweils einer Gesamtberechnungsvorschrift, in einem Schritt erfolgt, insbesondere in einem Berechnungsschritt. Dadurch werden somit die Berechnungsparameter wenigstens einer Gesamtberechnungsvorschrift gemeinsam in einem Schritt bestimmt.

Die Parametrierung kann so erfolgen, dass Sensorgrößen aller Lastsensoren bei unterschiedlichen auftretenden Lasten aufgenommen werden und die Berechnungsparameter anhand dieses Datensatzes gemeinsam bestimmt werden. Dazu wird für jeden Satz an Sensorgrößen ein Referenzwert für die zu bestimmende Lastgröße berechnet. Die einzigen Unbekannten sind dann die Berechnungsparameter. Werden ausreichend viele Datensätze aufgenommen, bei jeweils unterschiedlichen Lasten, können die Berechnungsparameter berechnet werden. Das kann durch Umstellen der Gesamtberechnungsvorschrift erfolgen. Dazu wird vorzugsweise eine Matrixnotation verwendet.

Je größer der Datensatz ist, umso geringer ist der Einfluss von statistischen Messabweichungen. Eine Parametrierung ist dennoch bereits bei wenigen aufgenommenen Lastfällen möglich. Es sollten aber wenigstens so viele Lastfälle für die Bestimmung aufgenommen werden, wie Berechnungsparameter vorhanden und damit zu bestimmen sind.

Gemäß einem weiteren Aspekt erfolgt zum Bestimmen der Berechnungsparameter keine einzelne Parametrierung einzelner Lastsensoren. Insbesondere erfolgt keine einzelne Kalibrierung oder Justierung einzelner Lastsensoren.

Es geht somit nicht um individuelle Lastsensoren, insbesondere nicht um eine etwaige individuelle Parametrierung oder Justierung jeweils eines Sensors, denn die kann bereits vor der Anwendung beim Hersteller der einzelnen Sensoren erfolgen. Hier geht es darum, einen Gesamtzusammenhang zwischen einer Lastgröße und den Sensorgrößen aller dazu betrachteten Sensoren gemeinsam zu finden. Selbst wenn jedem Lastsensor in der Gesamtberechnungsvorschrift eindeutig ein Parameter zugeordnet werden könnte, werden selbst diese Berechnungsparameter nicht einzeln bzw. individuell bestimmt. Stattdessen werden die Berechnungsparameter gemeinsam bestimmt, um die Berechnungsvorschrift in Ihrer Gesamtheit zu parametrieren und damit den Gesamtzusammenhang zu finden.

Gemäß einem weiteren Aspekt werden die Sensorgrößen sukzessive in mehreren Erfassungsschritten bei variierenden Betriebssituationen der Windenergieanlage erfasst. In jedem Erfassungsschritt wird dabei jeweils eine Sensorgröße für jeden Lastsensor erfasst. Jeder Erfassungsschritt erfasst somit mehrere Sensorgrößen, nämlich gerade so viele, wie die Sensoranordnung an Lastsensoren aufweist. Dabei bilden die in einem Erfassungsschritt aufgenommenen Sensorgrößen einen Sensorgrößensatz.

Weiterhin wird in jedem Erfassungsschritt zu dem Sensorgrößensatz wenigstens eine zugehörige Lastgröße als Referenzlastgröße ermittelt, nämlich insbesondere eine pro Gesamtberechnungsvorschrift. Insbesondere wird die Referenzlastgröße berechnet. Weiterhin werden die Erfassungsschritte jeweils mit einer veränderten Betriebssituation wiederholt. Insbesondere wenigstens so oft, wie die Gesamtberechnungsvorschrift zu bestimmende Berechnungsparameter aufweist, insbesondere wenigstens einmal öfter. Die Berechnungsparameter werden dann in Abhängigkeit von allen in den Erfassungsschritten erfassten Sensorgrößen und ermittelten zugehörigen Lastgrößen bestimmt.

Nach einem Erfassungsschritt liegen also wenigstens eine erfasste Lastgröße als Referenzlastgröße und mehrere Sensorgrößen vor, nämlich eine je Sensor, also ein Sensorgrößensatz mit einer Referenzlastgröße. Die wenigstens eine als Referenzlastgröße erfasste zugehörige Lastgröße entspricht der wenigstens einen Lastgröße, die eigentlich aus den Sensorgrößen bestimmt werden sollte, wenn die Parametrierung abgeschlossen wäre, also besonders ein Blattbiegemoment. Ohne diese Parametrierung, und damit für die Parametrierung, muss das Blattbiegemoment, um bei diesem Beispiel zu bleiben, anderweitig bestimmt werden. Bspw. kann das Blattbiegemoment aus einer bekannten Gewichtskraft, die je nach Stellung des Rotorblatts auf dieses wirkt, und je nach Stellung des Rotorblattes variiert, berechnet werden. Für jede Lastgröße, die mit der Sensoranordnung bestimmt werden soll, wird eine zugehörige Referenzlastgröße bestimmt.

Die Gesamtberechnungsvorschrift kann dann für diesen einen Erfassungsschritt als mathematische Gleichung dargestellt werden, in der die Referenzlastgröße und die Sensorgrößen bekannt sind. Gäbe es nur einen zu bestimmenden Berechnungsparameter, könnte die Gleichung nach diesem aufgelöst werden. Es sind aber mehrere Berechnungsparameter zu bestimmen und daher sind, um bei dieser Veranschaulichung zu bleiben, mehrere Gleichungen aufzustellen. Dafür werden die Erfassungsschritte mit veränderten Betriebssituationen wiederholt.

Die Betriebssituationen werden dabei so verändert, dass sich immer ein verändertes Blattbiegemoment, um bei diesem Beispiel zu bleiben, ergibt, denn es ergibt wenig Sinn, dieselbe Gleichung zweimal aufzustellen. Mathematisch gesprochen sollten die Gleichungen, die sich zu jedem Erfassungsschritt bzw. zu jeder Betriebssituation ergeben, "linear unabhängig voneinander" sein.

Werden so viele Erfassungsschritte durchgeführt, wie die Gesamtberechnungsvorschrift Berechnungsparameter hat, könnte ein Gleichungssystem mit entsprechend vielen Gleichungen aufgestellt und eindeutig gelöst werden. Werden aber mehr Erfassungsschritte durchgeführt, kann ein überbestimmtes Gleichungssystem aufgestellt werden.

Genau das ist die bevorzugte Variante, denn dadurch ist statt einer eindeutigen Lösung eine mit statistisch geringster Abweichung ermittelbar. Dabei wird angenommen, dass statistische Messabweichungen vorliegen können. Vorzugsweise werden dafür sehr viele Sensorgrößensätze jeweils mit Referenzlastgröße aufgenommen. Besonders wird vorgeschlagen, wenigstens doppelt so viele, oder sogar wenigstens zehnmal so viele Sensorgrößensätze mit Referenzlastgröße aufzunehmen, wie Berechnungsparameter zu bestimmen sind.

Gemäß einem weiteren Aspekt weist die Gesamtberechnungsvorschrift eine Berechnungsgleichung auf oder die Gesamtberechnungsvorschrift ist die Berechnungsgleichung. Die Berechnungsgleichung beschreibt mittels der Berechnungsparameter einen Zusammenhang zwischen der Lastgröße und den Sensorgrößen.

Zur Bestimmung der Berechnungsparameter wird ein Gleichungssystem aus mehreren Berechnungsgleichungen aufgestellt. Für jede Berechnungsgleichung des Berechnungssystems wird für die Lastgröße eine ermittelte Referenzlastgröße eingesetzt. Weiterhin werden für jede Berechnungsgleichung des Gleichungssystems für die Sensorgrößen zur ermittelten Referenzlastgröße zugehörige Sensorgrößen eingesetzt.

Das Gleichungssystem wird nach den Berechnungsparametern aufgelöst. Insbesondere werden mehr Berechnungsgleichungen aufgestellt, als die Gesamtberechnungsvorschrift Berechnungsparameter aufweist, sodass das Gleichungssystem überbestimmt ist. Dabei wird das Gleichungssystem so gelöst, dass sich eine statistisch optimale Lösung ergibt.

Der Zusammenhang zwischen der Lastgröße und den Sensorgrößen wird also durch die Berechnungsgleichung angegeben, in der die Lastgröße von den Sensorgrößen und Berechnungsparametern abhängt. Werden, um es anschaulich auszudrücken, die ermittelten Sensorgrößen in die Berechnungsgleichung eingesetzt, die auch die Berechnungsparameter enthält, so ergibt sich die zu berechnende Lastgröße.

Dazu müssen jedoch zunächst die Berechnungsparameter bestimmt werden, wozu das Gleichungssystem aus mehreren Berechnungsgleichungen aufgestellt wird. Die Berechnungsgleichungen dieses Gleichungssystems unterscheiden sich jeweils nur in den Werten der Sensorgrößen und der Referenzlastgröße, die jeweils in die Gleichungen eingesetzt werden. Jede Berechnungsgleichung weist somit als Unbekannte nur noch die Berechnungsparameter auf.

Zur Bestimmung der Berechnungsparameter wird dann das Gleichungssystem nach den Berechnungsparametern aufgelöst. Insbesondere kann das Gleichungssystem in Matrixnotation aufgeschrieben werden, sodass das Gleichungssystem nach einem Vektor aus Berechnungsparametern aufgelöst wird. Dazu ist vorgesehen, dass ein lineares Gleichungssystem vorliegt.

Um die Berechnungsparameter bestimmen zu können, wird insbesondere vorgeschlagen, dass das Gleichungssystem überbestimmt ist. Daher werden mehr Berechnungsgleichungen aufgestellt, als Berechnungsparameter vorhanden sind. Vor allem sollen sich die Berechnungsgleichungen anhand der Referenzlastgröße unterscheiden, um identische Gleichungen zu vermeiden.

Eine statistisch optimale Lösung ist besonders eine solche, bei der die Berechnungsparameter so gewählt sind, dass die Summe der Beträge oder der Quadrate der Abweichungen zwischen Referenzlastgröße und der Lastgröße, die sich jeweils aus den zugehörigen Sensorgrößen mit der Berechnungsgleichung und den gewählten Berechnungsparametern ergibt, minimal ist.

Eine solche statistisch optimale Lösung, bei der die Summe der Quadrate der Abweichungen minimal ist, lässt sich durch unten noch beschriebene Verfahren mit Hilfe der Pseudoinversen erreichen.

Gemäß einem weiteren Aspekt wird das Gleichungssystem aus mehreren Berechnungsgleichungen der Gesamtberechnungsvorschrift in Matrixform aufgestellt, mit einem Ausgangsvektor für die ermittelten Referenzlastgrößen, einer Messmatrix für die erfassten Sensorgrößen und einem Parametervektor für die zu bestimmenden Berechnungsparameter. Das Gleichungssystem wird so aufgestellt, dass der Ausgangsvektor gleich einem Produkt der Messmatrix mit dem Parametervektor ist.

Hier liegt der Gedanke zu Grunde, dass sich Lastgröße $L$ als Summe der Produkte $k_i \cdot x_i$ und dem Offset $k_0$ ergeben kann, nach der Formel:

$$L = \sum_{i=1}^{n} k_i \cdot x_i + k_0 .$$

Dabei sind $k_i$ die zu bestimmenden Parameter und $x_i$ die jeweils aufgenommenen Sensorgrößen jeweils desselben Sensors. Weiter unten finden sich ergänzende Erläuterungen. Dabei kann $k_0$ auch vereinfachend als null angenommen werden. In Matrixform ergibt sich für beide Fälle die Gleichung:

$$L = \vec{x}^{T} \cdot \vec{k} ,$$

Um die Parameter $k_i$ des Parametervektors $\vec{k}$ zu bestimmen, werden mehrere solcher Gleichungen aufgestellt und wie folgt in Matrixform zusammengefasst:

$$\vec{L} = A \cdot \vec{k} .$$

Es liegt nun ein Gleichungssystem mit mehreren Gleichungen vor. Um die Parameter $k_i$ des Parametervektors $\vec{k}$ zu bestimmen, kann für jede Gleichung eine Messung durchgeführt werden, um die Sensorgrößen $x_i$ zu erfassen. Die jeweiligen Lastgrößen $L$ des Lastgrößenvektors $\vec{L}$ sind aber nicht bekannt. Vereinfachend können an ihrer Stelle Referenzlastgrößen $L_{ref}$ verwendet werden, die jeweils aus Anlagenzuständen berechnete Lasten darstellen. Sie entsprechen im Idealfall den aus den Sensordaten ermittelten Lasten $L$, können in der Realität aber geringe Abweichungen aufweisen. Besonders erfassen die Referenzlastgrößen diverse reale Effekte nicht, wie Windeinflüsse, Nichtlinearitäten, Rauschen und weitere Effekte. Darin können sie sich von den zu ermittelnden Lasten unterscheiden. Es wird vorgeschlagen, diese Abweichungen zu vernachlässigen.

Mit dieser Vereinfachung bzw. Näherung kann statt des Lastgrößenvektors $\vec{L}$ der Referenzlastvektor der Ausgangsvektor $\vec{L}_{ref,}$ verwendet werden. Zusammen mit dem Parametervektor $\vec{k}$, und der Messmatrix A kann folgendes Gleichungssystem in Matrixform als Näherung aufgestellt werden:

$$\vec{L}_{ref} = A \cdot \vec{k}.$$

Dabei weist die Messmatrix $A$ alle erfassten Sensorgrößen auf. Die Messmatrix $A$ hat somit wenigstens so viele Spalten wie Lastsensoren vorhanden sind und so viele Zeilen, wie Messwerte pro Lastsensor aufgenommen worden sind. Für den Sensorgrößensatz aus Sensorgröße $x_1$ des ersten Lastsensors, Sensorgröße $x_2$ des zweiten Lastsensors, und Sensorgröße $x_3$ des dritten Lastsensors, also für ein System mit genau drei Lastsensoren, ergibt sich für die Messmatrix also

$$A = \begin{pmatrix} x_1(t=t_1) & x_2(t=t_1) & x_3(t=t_1) \\ x_1(t=t_2) & x_2(t=t_2) & x_3(t=t_2) \\ \dots & \dots & \dots \\ x_1(t=t_p) & x_2(t=t_p) & x_3(t=t_p) \end{pmatrix},$$

wenn zu den Zeitpunkten $t_1$ bis $t_p$ gemessen wurde und somit $p$ Sensorgrößensätze aufgenommen worden sind.

Zu jedem Sensorgrößensatz wurde auch jeweils die Referenzlastgröße $L_{ref}$ bestimmt, sodass der Ausgangsvektor ebenfalls so viele Zeilen aufweist, wie Messungen vorgenommen wurden. Er ergibt sich somit als

$$\vec{L}_{ref} = \begin{pmatrix} L_{ref}(t=t_1) \\ L_{ref}(t=t_2) \\ \dots \\ L_{ref}(t=t_p) \end{pmatrix}.$$

Zum Parametrieren der Sensoranordnung ist der Parametervektor $\vec{k}$ zu bestimmen, wobei $\vec{k}$ die zu bestimmenden Berechnungsparameter umfasst und somit wenigstens so viele Zeilen aufweist, wie Lastsensoren vorhanden sind, bei drei Lastsensoren also

$$\vec{k} = \begin{pmatrix} k_1 \\ k_2 \\ k_3 \end{pmatrix}.$$

Dazu wird mittels Bildung einer Pseudoinversen der Messmatrix eine Näherungslösung für das Gleichungssystem gefunden. Es gilt somit

$$\vec{k} = (A^T \cdot A)^{-1} \cdot A^T \cdot \vec{L}_{ref}.$$

Durch diesen Ansatz wird eine Lösung gefunden, bei der ein Fehler zwischen L und $L_{ref}$ minimiert ist.

Durch die Verwendung der Pseudoinversen werden die Berechnungsparameter also in nur einem Schritt bestimmt und alle erfassten Sensorgrößen bei der Bestimmung gleichzeitig berücksichtigt. Zudem wird durch die Bildung der Pseudoinversen die Summe der Fehlerquadrate der erfassten Lastgröße minimiert. Das Verfahren wird somit robuster je mehr Messwerte aufgenommen werden, also je größer $p$ wird. Dabei bleibt die Berechnung rechentechnisch einfach und lässt sich schnell und leicht lösen. Es ist zu beachten, dass die Ordnung der inversen Matrix nicht von der Anzahl der Erfassungsschritte abhängt, sondern nur von der Anzahl der zu bestimmenden Berechnungsparameter. Die Ordnung kann also 3 oder 4 betragen, selbst wenn 100 Messungen aufgenommen wurden. Die inverse Matrix lässt sich daher mit wenig Rechenaufwand bestimmen.

Alternativ oder ergänzend weist der Parametervektor einen Offset auf, und die Messmatrix eine zum Offset korrespondierende zusätzliche Spalte, die mit dem Wert 1 gefüllt ist. Bei der Multiplikation der Messmatrix mit dem Parametervektor wird also der Offset jeweils mit dem Wert 1 multipliziert.

Der Parametervektor $\vec{k}$ ergibt sich mit dem weiteren Offset $k_0$ somit zu

$$\vec{k} = \begin{pmatrix} k_1 \\ k_2 \\ k_3 \\ k_0 \end{pmatrix},$$

und auch die Messmatrix weist eine weitere Spalte gefüllt mit Einsen auf

$$A = \begin{pmatrix} x_1(t=t_1) & x_2(t=t_1) & x_3(t=t_1) & 1 \\ x_1(t=t_2) & x_2(t=t_2) & x_3(t=t_2) & 1 \\ \dots & \dots & \dots & 1 \\ x_1(t=t_p) & x_2(t=t_p) & x_3(t=t_p) & 1 \end{pmatrix}.$$

Alternativ oder ergänzend weist die Messmatrix zusätzlich zu den Sensorgrößen Spalten mit Potenzen der Sensorgrößen auf. Der Parametervektor weist dazu korrespondierende Berechnungsparameter auf.

Es ist dadurch weiterhin möglich neben der linearen Berücksichtigung, einen nicht-linearen Einfluss der Sensorgrößen zu berücksichtigen. Die zugrundeliegende Gesamtberechnungsvorschrift ist in diesem Fall eine Polynomfunktion. Abhängig vom Grad des Polynoms wird die Messmatrix somit um weitere Spalten ergänzt. Für jeden Grad des Polynoms und jeden Lastsensor weist die Messmatrix dann eine Spalte auf, zuzüglich einer optionalen Spalte für den Offset. Die Anzahl der Spalten entspricht also dem Produkt aus dem Grad des Polynoms und der Anzahl an Lastsensoren und optional eine Spalte mehr. Die Anzahl der Berechnungsparameter des Parametervektors entspricht der Anzahl an Spalten der Messmatrix.

Gemäß einem weiteren Aspekt umfassen die Berechnungsparameter einen Offset $k_0$. Jedem Lastsensor wird wenigstens ein Berechnungsparameter $k_i$ zugeordnet. Weiterhin ergibt sich die Gesamtberechnungsvorschrift, indem für jeden der Lastsensoren ein Produkt aus Sensorgröße $x_i$ des jeweiligen Lastsensors $i$ mit dem zum Lastsensor zugehörigen wenigstens einen Berechnungsparameter $k_i$ gebildet wird. Die Lastgröße L ergibt sich als Summe der Produkte $k_i \cdot x_i$ und dem Offset $k_0$ nach der Formel:

$$L = \sum_{i=1}^{n} k_i \cdot x_i + k_0 \,.$$

Die Formel gilt für n Lastsensoren. Bei drei Lastsensoren ergibt sich die Formel für die Gesamtberechnungsvorschrift somit zu

$$L = k_1 \cdot x_1 + k_2 \cdot x_2 + k_3 \cdot x_3 + k_0 \,,$$

wobei der Berechnungsparameter $k_1$ dem ersten Lastsensor mit Sensorgröße $x_1$ zugeordnet wird. Gleiches gilt entsprechend für die weiteren Berechnungsparameter.

Die Sensorgröße selbst ist proportional zu der Dehnung $\varepsilon$ des jeweiligen Lastsensors. Das Bestimmen dieser Dehnung als Zwischengröße ist jedoch nicht notwendig.

In Matrixnotation ließe sich die Lastgröße auch beschreiben als

$$L = \vec{x}^T \cdot \vec{k} \,,$$

wobei gilt

$$\vec{x} = \begin{pmatrix} x_1 \\ x_2 \\ x_3 \\ 1 \end{pmatrix}, \text{ und } \vec{k} = \begin{pmatrix} k_1 \\ k_2 \\ k_3 \\ k_0 \end{pmatrix}.$$

Gemäß einem weiteren Aspekt werden zur sukzessiven Erfassung der Sensorgrößen bei variierenden Betriebssituationen, die Betriebssituationen so gewählt werden, dass sich unterschiedliche Lastgrößen, insbesondere unterschiedliche Biegemomente, am Rotorblatt einstellen.

Die Biegemomente resultieren dabei aus einem Eigengewicht des Rotorblatts. Sie werden dadurch variiert, dass der Rotor in seiner Drehposition verändert wird. Alternativ oder ergänzend kann auch ein Blattwinkel des Rotorblattes verändert werden.

Das Ziel ist es dabei, möglichst viele unterschiedliche Biegemomente am Rotorblatt zu erzeugen. Bei jeder Messung, also bei jeder Aufnahme eines Sensorgrößensatzes, liegt dann vorzugsweise eine andere Last am Rotorblatt an, insbesondere ein anderes Biegemoment. Entsprechend unterscheiden sich natürlich auch die berechneten Referenzlastgrößen voneinander, denn ihre Berechnung kennt die geänderte Betriebssituation. Die Berechnungsparameter können dabei umso genauer bestimmt werden, je weiter die Messwerte voneinander abweichen.

Die Last kann auch von Umgebungsbedingungen abhängen, insbesondere vom Wind. Vorzugsweise erfolgt das Erfassen der Sensorgrößen bei möglichst schwachem Wind, sodass sich die Last näherungsweise nur aus dem Eigengewicht des Rotorblattes ergibt.

Zum Variieren der Last reicht es dann aus, wenn sich das Rotorblatt weiterdreht, da je nach Rotorposition die Gewichtskraft anders an dem Rotorblatt angreift. Idealerweise wird die Erfassung durchgeführt, wenn der Wind so schwach ist, dass der Rotor noch gerade weiterdrehen kann. Durch Verändern des Blattwinkels kann zusätzlich die angreifende Last variiert werden.

Beim Berechnen der Referenzlastgröße ist zu beachten, dass die Lastsensoren ihr eigenes Koordinatensystem haben, das nämlich im Rotorblatt liegt und sich mit dem Blattwinkel verändert. Eine entsprechende Transformation in Abhängigkeit vom Blattwinkel ist daher zu berücksichtigen. Besonders kann zur Berechnung des Biegemomentes als Referenzlastgröße die Gewichtskraft in das Koordinatensystem der Lastsensoren transformiert werden.

Gemäß einem weiteren Aspekt wird zur sukzessiven Erfassung der Sensorgrößen bei variierenden Betriebssituationen in Erfassungsschritten, den Erfassungsschritten ein Ablaufplan vorgegeben, sodass die variierenden Betriebssituationen gemäß dem Ablaufplan eingestellt werden. Das Parametrieren der Sensoranordnung wird nach Beendung des Ablaufplans durchgeführt.

Durch den Ablaufplan kann also bereits vorab bestimmt werden, welche Betriebssituationen eingestellt werden. Es wird somit eine Routine generiert, die möglichst viele verschiedene eingestellte Betriebssituationen gewährleistet. Vorzugsweise werden hierdurch die Referenzlastgrößen, besonders die Biegemomente, so vorgegeben, dass sie über einen vorgegebenen Bereich gleichmäßig verteilt sind, der vorzugsweise möglichst groß gewählt wird, aber doch so klein, dass er über Gewichtskräfte erreicht werden kann. Nachdem alle Betriebssituationen gemäß Ablaufplan eingestellt wurden, ist ein ausreichend großer Datensatz an Sensorgrößensätzen bestimmt, einschließlich Referenzlastgrößen, um eine gute Parametrierung der Sensoranordnung zu gewährleisten.

Gemäß einem weiteren Aspekt ist zum Erfassen der Sensorgrößen wenigstens eine Betriebseinstellung vorgesehen aus der Liste aufweisend: die Windenergieanlage wird in einem Trudelbetrieb betrieben, ein Blattwinkel des Rotorblattes wird eingestellt, eine Leistung wird eingestellt, ein Drehmoment eines mit dem Rotor verbundenen Generators wird eingestellt, und eine Drehzahl des Rotors wird eingestellt.

Zum Erfassen der Sensorgrößen wird wenigstens eine der Betriebseinstellungen variiert. Dabei wird jede Betriebseinstellung für eine vorbestimmte Testdauer beibehalten. Vorzugsweise wird jede Betriebseinstellung für mehrere Erfassungsschritte beibehalten.

Alternativ oder ergänzend wird wenigstens eine Betriebseinstellung so lange beibehalten, dass jeweils mehrere Betriebssituationen durchlaufen werden, zu denen jeweils ein Erfassungsschritt zum Erfassen der Sensorgrößen durchgeführt wird.

Eine Betriebssituation, die einem Erfassungsschritt zugrunde liegt, ist insbesondere eine Rotorposition mit eingestelltem Blattwinkel. Ein eingestelltes Generatormoment und/oder eine eingestellte Leistung kann hinzukommen. Im Trudelbetrieb dreht sich der Rotor sehr langsam und damit ändert sich bei festen Betriebseinstellungen, also eingestelltem Trudelbetrieb und eingestelltem Blattwinkel, die Betriebssituation, nämlich von einer Rotorposition zur nächsten.

So können besonders über eine volle, eine halbe oder eine viertel Drehung des Rotors einige Betriebssituationen durchfahren werden, wobei einige Sensorgrößensätze nebst Referenzlastgrößen aufgenommen werden. Das kann dann mit einem veränderten Blattwinkel wiederholt werden. Insbesondere kann weiterhin im Trudelbetrieb der Rotor gedreht werden. Dann können wieder über eine volle, eine halbe oder eine viertel Drehung des Rotors einige Betriebssituationen durchfahren werden und wieder einige Sensorgrößensätze nebst Referenzlastgrößen aufgenommen werden.

Es ist aber auch möglich mehrere Betriebseinstellungen aus der Liste gemeinsam zu variieren.

Im Trudelbetrieb dreht sich der Rotor der Windenergieanlage, jedoch speist die Windenergieanlage keine Leistung ins Netz ein. Insbesondere wird auch keine Leistung erzeugt. Der Rotor befindet sich also in einem Zustand in dem angenommen werden kann, dass die Belastungen auf das Rotorblatt nur aufgrund des Eigengewichts des Rotorblattes hervorgerufen werden. Weitere Belastungen können somit vernachlässigt werden, was zu einem genaueren Ergebnis führt. Dies gilt insbesondere, wenn die Windgeschwindigkeit klein ist und daher aerodynamische Belastungen vernachlässigt werden können. Typischerweise wird der Blattwinkel im Trudelbetrieb auf einen Wert im Bereich von etwa 50° bis 70° oder mehr eingestellt, insbesondere wird er auf einen Wert von über 60° eingestellt.

Doch auch wenn Leistung erzeugt wird, kann die Sensoranordnung parametriert werden. Dazu lassen sich dann weiter die Leistung und/oder das Drehmoment des Rotors einstellen. Dann kann jedoch nicht mehr von einer Belastung allein aufgrund des Eigengewichts ausgegangen werden, sodass es erforderlich wird, die zusätzlich auftretenden Belastungen in der Referenzlastgröße zu berücksichtigen.

Gemäß einem weiteren Aspekt erfolgt das Erfassen der Sensorgrößen zum Parametrieren der Sensoranordnung bei Windgeschwindigkeiten in einem ersten Windgeschwindigkeitsbereich und einem zweiten Windgeschwindigkeitsbereich. Der erste Windgeschwindigkeitsbereich liegt zwischen einer Anlaufwindgeschwindigkeit und einer ersten Windgeschwindigkeit, die größer als die Anlaufwindgeschwindigkeit ist. Der zweite Windgeschwindigkeitsbereich liegt zwischen der ersten Windgeschwindigkeit und einer zweiten Windgeschwindigkeit, die größer als die erste Windgeschwindigkeit ist. Außerdem wird das Erfassen bei Windgeschwindigkeiten im ersten Windgeschwindigkeitsbereich wiederholt, wenn das Erfassen zuvor bei Windgeschwindigkeiten im zweiten Windgeschwindigkeitsbereich erfolgt ist.

Vorzugsweise wird demnach die Sensoranordnung dann parametriert, wenn geringe Windgeschwindigkeiten vorliegen. Dabei muss die Windgeschwindigkeit lediglich ausreichend groß sein, um den Rotor zu drehen, somit über der Anlaufwindgeschwindigkeit liegen. Die Anlaufwindgeschwindigkeit bezeichnet somit die Windgeschwindigkeit, die ausreichend ist, den Rotor der Windenergieanlage ohne Leistungsabgabe zu drehen. Mit ihr kann eine Lagerreibung des Rotors überwunden werden.

Übersteigt die Windgeschwindigkeit die erste Windgeschwindigkeit können aerodynamische Einflüsse nicht mehr vernachlässigt werden und müssen in der Berechnung der Referenzlastgröße berücksichtigt werden. Die erste Windgeschwindigkeit ist demnach so gewählt, dass aerodynamische Belastungen vernachlässigt werden können, wenn die Parametrierung bzw. das Aufnehmen von Messwerten dafür, bei Windgeschwindigkeiten bis zur ersten Windgeschwindigkeit erfolgt.

Sollte ein Parametrieren erforderlich sein, bevor so geringe Windgeschwindigkeiten vorliegen, kann die Sensoranordnung auch oberhalb der ersten Windgeschwindigkeit parametriert werden. Dann wird das Parametrieren jedoch bei besseren Bedingungen, nämlich wenn die Windgeschwindigkeit im ersten Windgeschwindigkeitsbereich liegt, wiederholt, um das Ergebnis der Parametrierung zu verbessern.

Gemäß einem weiteren Aspekt wird der erste Geschwindigkeitsbereich im Bereich einer Startwindgeschwindigkeit gewählt, ab der die Windenergieanlage zum Betrieb gestartet wird. Die Startwindgeschwindigkeit liegt dabei oberhalb der Anlaufwindgeschwindigkeit. Insbesondere liegt der erste Geschwindigkeitsbereich zwischen 30% und 200% der Startwindgeschwindigkeit, besonders bevorzugt sogar zwischen 50% und 150% der Startwindgeschwindigkeit, wobei der Geschwindigkeitsbereich so gewählt wird, dass Windgeschwindigkeiten unterhalb der Anlaufwindgeschwindigkeit vermieden werden. Der Rotor dreht sich also.

Alternativ oder ergänzend wird der erste Geschwindigkeitsbereich im Bereich ab der Anlaufwindgeschwindigkeit gewählt. Der erste Geschwindigkeitsbereich liegt insbesondere zwischen 100% und 250% der Anlaufwindgeschwindigkeit.

Alternativ oder ergänzend liegt der erste Geschwindigkeitsbereich zwischen 1,5 m/s und 8 m/s und besonders bevorzugt zwischen 2 m/s und 6 m/s.

Als Startwindgeschwindigkeit wird die Windgeschwindigkeit bezeichnet, bei der die Windenergieanlage gestartet wird, nämlich Leistung erzeugt und einspeisen kann. Die Startwindgeschwindigkeit liegt somit über der Anlaufwindgeschwindigkeit, ab der sich der Rotor zu drehen beginnt, aber noch keine Leistung erzeugt wird. Sowohl Startwindgeschwindigkeit als auch Anlaufwindgeschwindigkeit können für jede Windenergieanlage verschieden sein. Zudem können die Startwindgeschwindigkeit und die Anlaufwindgeschwindigkeit auch abhängig von Wetterbedingungen sein, wie etwa einer Luftdichte.

Gemäß einem weiteren Aspekt ist die Sensoranordnung zum Erfassen von wenigsten zwei Lastgrößen eingerichtet. Für jede Lastgröße ist eine eigene Gesamtberechnungsvorschrift mit eigenen Berechnungsparametern vorgesehen.

Ist die Sensoranordnung einmal parametriert, lassen sich mit der Sensoranordnung somit wenigstens zwei Lastgrößen berechnen. Vorzugsweise ein Biegemoment in eine Schwenkrichtung und ein Biegemoment in eine Schlagrichtung des Rotorblattes.

Gemäß einem weiteren Aspekt ist eine der Lastgrößen ein Blattbiegemoment des Rotorblattes in eine erste Richtung, insbesondere in eine Schlagrichtung, und eine der Lastgrößen ein Blattbiegemoment des Rotorblattes in eine zweite Richtung, insbesondere in eine Schwenkrichtung. Optional ist eine der Lastgrößen eine axiale Kraft des Rotorblattes. Für jede Lastgröße wird eine eigene Gesamtberechnungsvorschrift verwendet, mit eigenen Berechnungsparametern, um die jeweilige Lastgröße aus den Sensorgrößen zu berechnen. Die Berechnungsparameter jeder Gesamtberechnungsvorschrift werden jeweils unter gleichzeitiger Berücksichtigung von erfassten Sensorgrößen aller Lastsensoren bestimmt, vorzugsweise aber unter Verwendung derselben erfassten Sensorgrößen. Zum Bestimmen der Berechnungsparameter wird eine Messmatrix aus erfassten Sensorgrößen für alle Gesamtberechnungsvorschriften gemeinsam aufgenommen und verwendet. Für jede Lastgröße wird also dieselbe Messmatrix verwendet. Für jede Gesamtberechnungsvorschrift und damit für jede Lastgröße wird aber ein eigener Ausgangsvektor aus ermittelten Referenzlastgrößen verwendet.

Soll also beispielsweise als Lastgröße ein Biegemoment $M_x$ in eine Richtung x, z.B. eine Schlagrichtung des Rotorblattes, bestimmt werden, könnte sich für ein Beispiel mit drei Lastsensoren die Formel der Gesamtberechnungsvorschrift ergeben zu

$$M_x = k_{x,1} \cdot x_1 + k_{x,2} \cdot x_2 + k_{x,3} \cdot x_3 + k_{x,0}.$$

Für denselben Sensorgrößensatz ließe sich mit angepassten Berechnungsparametern auch das Biegemoment $M_y$ in eine zweite Richtung y, z.B. eine Schwenkrichtung des Rotorblattes, bestimmen zu

$$M_y = k_{y,1} \cdot x_1 + k_{y,2} \cdot x_2 + k_{y,3} \cdot x_3 + k_{y,0} \, .$$

Optional ist auch die axiale Kraft, die am Rotorblatt wirkt, berechenbar, mit angepassten Berechnungsparametern

$$F_z = k_{z,1} \cdot x_1 + k_{z,2} \cdot x_2 + k_{z,3} \cdot x_3 + k_{z,0} \, .$$

Die Lastgrößen, Biegemoment in eine erste Richtung x, Biegemoment in eine zweite Richtung y, und axiale Kraft in eine dritte Richtung z, ergeben sich bei derselben angreifenden Kraft, also bei derselben Betriebssituation. Daher kann zur Bestimmung der jeweiligen Berechnungsparameter auch jeweils derselbe Datensatz an Sensorgrößensätzen herangezogen werden, die somit bei denselben Betriebssituationen aufgenommen werden können. Lediglich die Referenzlastgröße muss für jede zu bestimmende Lastgröße einzeln berechnet werden. Auch das kann aber zu denselben Betriebssituationen erfolgen, wobei sich nur die Berechnung der Referenzlastgrößen unterscheidet.

Gemäß einem weiteren Aspekt wird in jedem Erfassungsschritt für jeden Lastsensor die Referenzlastgröße in Abhängigkeit von einer Gravitationskraft berechnet, die auf das Rotorblatt wirkt. Dazu wird die Gravitationskraft in ein Koordinatensystem des Rotorblattes umgerechnet. Dies erfolgt unter Berücksichtigung eines Blattwinkels des Rotorblattes, einer Drehposition des Rotors, eines Neigungswinkels des Rotors gegenüber einer Horizontalen, und/oder eines Neigungswinkels des Rotorblattes gegenüber einer Rotationsebene des Rotors.

Die Gewichtskraft kann über die bekannte Masse und Massenverteilung des Rotorblattes berechnet werden. Sie wirkt sich je nach Stellung des Rotorblattes unterschiedlich auf die Lastgröße aus. Um das zu berücksichtigen wird die Umrechnung der Gewichtskraft in das Koordinatensystem des Rotorblattes vorgeschlagen. Dazu können Rotationsmatrizen verwendet werden. Das Koordinatensystem des Rotorblattes bezieht sich somit auf den Bereich, in dem die Lastsensoren am Rotorblatt angebracht sind.

Gemäß einem weiteren Aspekt wird zur sukzessiven Erfassung der Sensorgrößen bei variierenden Betriebssituationen in Erfassungsschritten die Referenzlastgröße in jedem Erfassungsschritt zusätzlich in Abhängigkeit von auftretenden aerodynamischen Kräften und/oder auftretenden aerodynamischen Momenten, die auf das Rotorblatt wirken, ermittelt.

Werden die aerodynamischen Lasten mitberücksichtigt, verbessert dies das Ergebnis der Berechnung der Referenzlastgrößen. Die Berechnungsparameter lassen sich somit noch genauer bestimmen. Dies gilt besonders, wenn die Windgeschwindigkeit oberhalb der ersten Windgeschwindigkeit liegt.

Hierdurch wird zudem erreicht, dass zur Parametrierung auch Sensorgrößen zu Betriebssituationen aufgenommen werden können, zu denen aerodynamische Einflüsse nicht vernachlässigt werden können.

Gemäß einem weiteren Aspekt wird ein nichtlinearer Zusammenhang zwischen den Sensorgrößen und der Lastgröße berücksichtigt, indem die Berechnungsparameter einen oder den Offset $k_0$ umfassen, jedem Lastsensor insgesamt m Berechnungsparameter $k_{i,j}$ zugeordnet werden, wobei m größer als eins ist, und sich die Gesamtberechnungsvorschrift bei n Lastsensoren für die Lastgröße L ergibt als

$$L = \sum_{i=1}^{n} \left( \sum_{j=1}^{m} k_{i,j} \cdot x_i^j \right) + k_0.$$

Die Lastgröße berechnet sich somit anhand eines Polynoms das höhere Potenzen der Sensorgrößen $x_i$ erlaubt.

In erster Näherung kann zum Beispiel ein Polynom zweiten Grades gewählt werden, also $j = 2$, wonach sich die Lastgröße ergibt als

$$L = k_{1,1} \cdot x_1 + k_{1,2} \cdot x_1^2 + k_{2,1} \cdot x_2 + k_{2,2} \cdot x_2^2 + k_{3,1} \cdot x_3 + k_{3,2} \cdot x_3^2 + k_0 \, .$$

Sollen Nichtlinearitäten berücksichtigt werden, muss dies auch bei der Berechnung der Referenzlastgrößen Berücksichtigung finden.

Bei einer Matrixschreibweise könnte eine Messmatrix A in jeder Spalte jeweils die erfassten Sensorgrößen $x_i$ mit entsprechender Potenz aufweisen, und in einer Spalte immer den Wert eins, was der Potenz 0 entspricht.

Erfindungsgemäß wird auch eine Windenergieanlage vorgeschlagen, mit einer Sensoranordnung aus mehreren Lastsensoren eines Rotorblattes eines Rotors der Windenergieanlage zum Erfassen wenigstens einer Lastgröße, die für eine Last repräsentativ ist, die auf das Rotorblatt wirkt, wobei das Rotorblatt wenigstens drei Lastsensoren aufweist. Jeder der Lastsensoren nimmt eine von der Last abhängige physikalische Größe des Rotorblattes auf und gibt eine dazu repräsentative Größe als erfasste Sensorgröße aus. Die Windenergieanlage weist auch eine Steuereinrichtung, insbesondere eine Parametriereinheit, auf. Die Steuereinrichtung ist dazu eingerichtet, die Sensoranordnung gemäß einem der beschriebenen Aspekte zu parametrieren.

Dazu werden die Lastsensoren, die besonders im Bereich der Blattwurzel auf dem Rotorblatt angeordnet sind, über den Umfang des Rotorblattes verteilt angebracht. Vorzugsweise werden drei Lastsensoren angebracht, die in einem Winkel von etwa 120° zueinander um den Umfang verteilt sind. Dieser Winkel wird jedoch bei der Parametrierung nicht berücksichtigt. Daher können die Lastsensoren zueinander auch in einem anderen Winkel, bzw. in einem anderen Abstand zueinander, angebracht werden. Es ist auch nicht notwendig den Winkel zu kennen. Somit führt ein ungenaues Anbringen der Lastsensoren nicht zu Fehlern in der Parametrierung. Das kann dadurch erreicht werden, dass zum Parametrieren der Sensoranordnung die Berechnungsparameter der Gesamtberechnungsvorschrift unter gleichzeitiger Berücksichtigung von erfassten Sensorgrößen aller Lastsensoren bestimmt werden. Es erfolgt also keine Einzelkalibrierung der einzelnen Sensoren.

Insbesondere ist die Parametrierung gemäß einem der beschriebenen Aspekte auf der Steuereinheit implementiert. Dazu kann alternativ oder ergänzend auch eine Parametriereinheit vorgesehen sein, auf der die Parametrierung implementiert ist.

Die Steuereinheit und/oder Parametriereinheit stellt somit verschiedene Betriebssituationen und/oder Betriebseinstellungen ein, und führt mehrere Erfassungsschritte durch, insbesondere gemäß einem Ablaufplan, der in der Steuereinheit und/oder Parametriereinheit abgespeichert ist. Weiterhin werden Sensorgrößensätze erfasst und die Berechnungsparameter berechnet und abgespeichert. Die Steuereinheit und/oder Parametriereinheit kann auch in einem Prozessrechner der Windenergieanlage implementiert sein.

Figur 1      zeigt eine Windenergieanlage in perspektivischer Ansicht.

Figur 2      zeigt ein Rotorblatt mit einer Sensoranordnung.

Figur 3      zeigt eine Sensoranordnung.

Figur 4      zeigt ein Ablaufdiagramm für ein erfindungsgemäßes Verfahren.

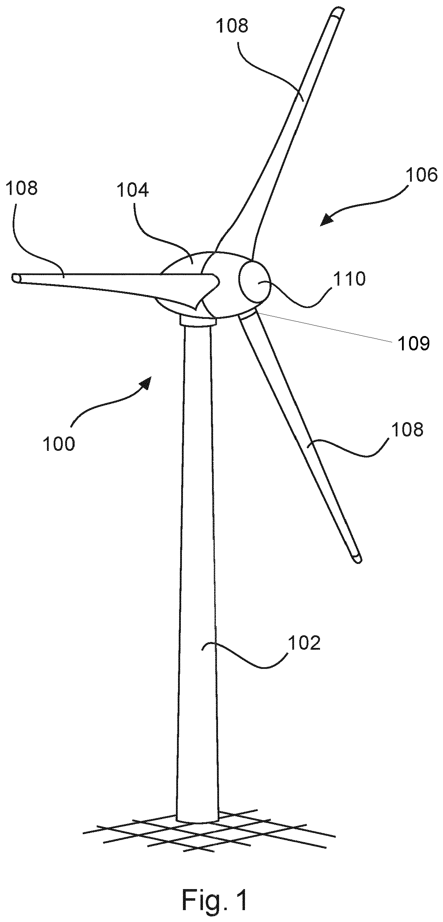

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Blattwinkel der Rotorblätter 108, die synonym auch als Pitchwinkel bezeichnet werden können, können durch Pitchmotoren an den Rotorblattwurzeln 109 der jeweiligen Rotorblätter 108 verändert werden.

An jedem der Rotorblätter 108 sind jeweils drei Lastsensoren angeordnet.

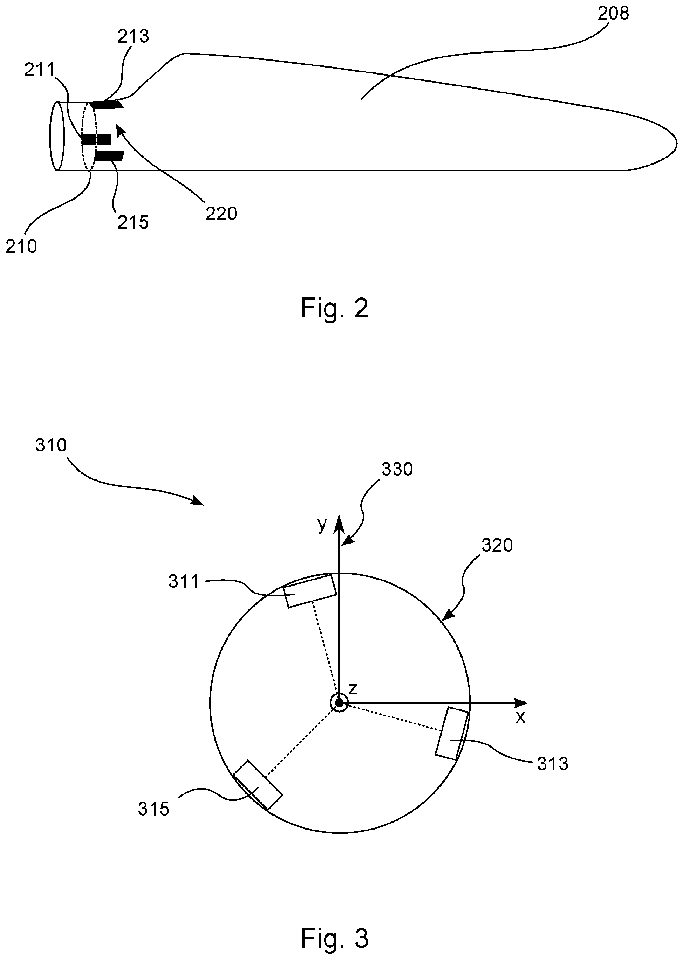

Fig. 2 zeigt ein Rotorblatt 208 mit einer Sensoranordnung 210. Die Sensoranordnung 210 weist drei Lastsensoren 211, 213, 215 auf. Die Sensoranordnung 210 ist im Bereich der Blattwurzel 220 des Rotorblattes 208 angebracht. Dabei sind die drei Lastsensoren 211, 213, 215 um den Umfang des Rotorblattes herum verteilt. Idealerweise sind die Lastsensoren 211, 213, 215 zueinander um einen Winkel von jeweils 120° um den Umfang des Blattumfangs versetzt. Auf eine exakte Positionierung kommt es aber nicht an.

Fig. 3 zeigt schematisch die Sensoranordnung 310 mit drei Lastsensoren 311, 313, 315, die im Bereich der Blattwurzel 320 um den Umfang des Rotorblattes verteilt sind.

Die drei Lastsensoren 311, 313, 315 bilden also zusammen die Sensoranordnung 310, die zur Erfassung einer Lastgröße eingerichtet ist. Dabei soll die Lastgröße in eine der Raumrichtungen $x, y, z$ des Koordinatensystems 320 bestimmt werden. Die Koordinatenachse $z$ zeigt dabei in die Figur hinein und entspricht damit einer Richtung in Blattlängsachse.

Die zu erfassende Lastgröße kann z.B. ein Biegemoment $M_x$ des Rotorblattes in eine Schlagrichtung $x$, ein Biegemoment $M_y$ des Rotorblattes in eine Schwenkrichtung $y$, oder eine axiale Kraft $F_z$ in Längsrichtung $z$ des Rotorblattes sein. Dabei ist es nicht erforderlich, dass die Messrichtungen der Lastsensoren 311, 313, 315 entlang einer der Koordinatenachsen $x, y, z$ des Koordinatensystems 320 liegt.

Biegt sich das Rotorblatt in Folge einer Last, die auf das Rotorblatt wirkt, erfährt jeder der Lastsensoren 311, 313, 315 eine Längenänderung bzw. Dehnung. Die physikalische Größe der Längenänderung wird von den Lastsensoren 311, 313, 315 durch eine dazu repräsentative Sensorgröße erfasst.

Wirkt also beispielsweise ein Biegemoment $M_x$ in eine Schlagrichtung $x$, erfährt jeder der Lastsensoren 311, 313, 315 gemäß seiner Position in der Sensoranordnung 310 eine Dehnung und erfasst eine zur Dehnung proportionale Sensorgröße.

Um aus den Sensorgrößen der Lastsensoren 311, 313, 315 die Lastgröße zu berechnen, wird die Sensoranordnung 310 parametriert.

Zur Parametrierung der Sensoranordnung 310 wird eine Gesamtberechnungsvorschrift zugrunde gelegt. Die Lastgröße lässt sich somit anhand der Gesamtberechnungsvorschrift berechnen, die einen Zusammenhang zwischen den erfassten Sensorgrößen der Lastsensoren 311, 313, 315 und der Lastgröße bildet. Dabei kann die Lastgröße direkt aus den gemessenen Sensorgrößen bestimmt werden. Es muss also nicht zuerst die physikalische Größe, nämlich die Dehnung, bestimmt werden.

Die Gesamtberechnungsvorschrift weist dabei mehrere Berechnungsparameter auf. Je nachdem, welche Lastgröße bestimmt werden soll, werden andere Berechnungsparameter verwendet.

Für das Biegemoment $M_x$ in Schlagrichtung $x$ wird z.B. die Gesamtberechnungsvorschrift

$$M_x = k_{x,1} \cdot x_1 + k_{x,2} \cdot x_2 + k_{x,3} \cdot x_3 + k_{x,0}$$

**verwendet,** mit den Berechnungsparametern $k_{x,1}$, $k_{x,2}$, $k_{x,3}$, $k_{x,0}$, wobei $k_{x,0}$ einen Offset bildet. Der erste Lastsensor 311 misst dabei die erste Sensorgröße $x_1$, der zweite Lastsensor 313 die zweite Sensorgröße $x_2$ und der dritte Lastsensor 311 die dritte Sensorgröße $x_3$.

Für denselben Sensorgrößensatz aus Sensorgrößen $x_1, x_2, x_3$ lässt sich mit den weiteren Berechnungsparametern $k_{y,1}$, $k_{y,2}$, $k_{y,3}$, $k_{y,0}$ auch das Biegemoment $M_y$ in Schwenkrichtung y berechnen gemäß

$$M_y = k_{y,1} \cdot x_1 + k_{y,2} \cdot x_2 + k_{y,3} \cdot x_3 + k_{y,0} \,.$$

Zur Parametrierung der Sensoranordnung 310 werden daher die Berechnungsparameter bestimmt.

Die erste, zweite und dritte Sensorgröße $x_1$, $x_2$ und $x_3$ sind dabei für beide Biegemomente gleich.

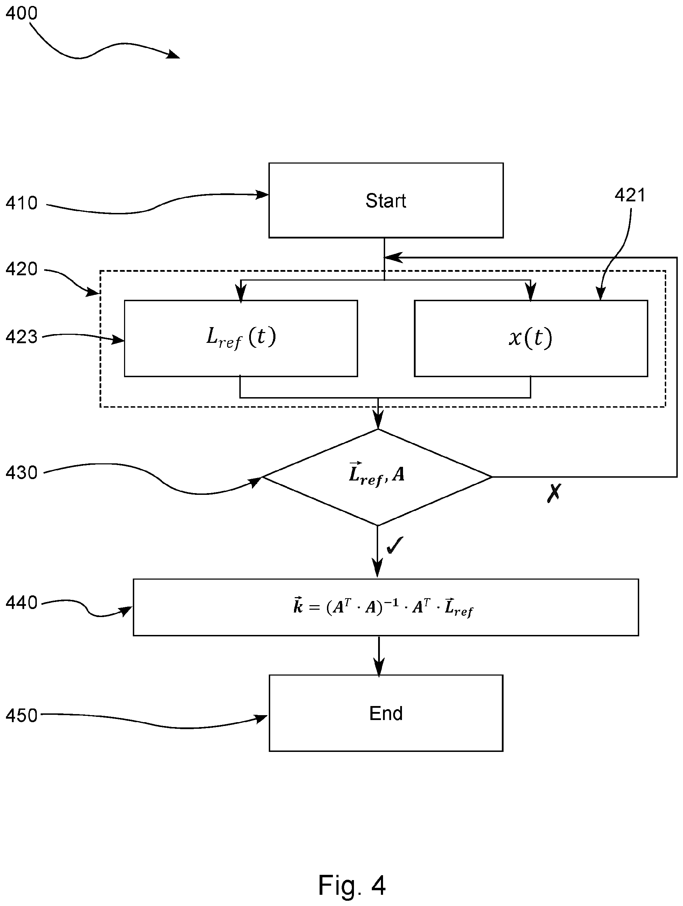

Fig. 4 zeigt ein Verfahren 400 zum Parametrieren der Sensoranordnung 310.

Im Startblock 410 wird die Parametrierung initiiert. Die Parametrierung wird bevorzugt dann initiiert, wenn zwar ausreichend Wind weht, sodass sich der Rotor der Windenergieanlage dreht, aber die Windgeschwindigkeit so gering ist, dass nur Belastungen, die durch die Gravitation hervorgerufen werden, Berücksichtigung finden, weitere Belastungen aber vernachlässigt werden können. Die auftretenden Biegemomente resultieren somit aus einem Eigengewicht des Rotorblatts.

Es wird dann zum Zeitschritt $t = t_1$ ein Erfassungsschritt 420 durchgeführt. In dem Erfassungsschritt 420 wird in einem Sensorgrößensatz-Bestimmungsschritt für jeden Lastsensor 311, 313, 315 eine Sensorgröße $x_1(t = t_1)$, $x_2(t = t_1)$, $x_3(t = t_1)$ erfasst. Die Sensorgrößen $x_1(t = t_1)$, $x_2(t = t_1)$, $x_3(t = t_1)$ aller Lastsensoren 311, 313, 315 bilden zusammen den Sensorgrößensatz zum Zeitschritt $t = t_1$.

Zudem wird in dem Erfassungsschritt 420 ein Referenzlastgrößen-Bestimmungsschritt 423 durchgeführt. Dabei wird eine Referenzlastgröße $L_{ref}(t = t_1)$ bestimmt. Die Referenzlastgröße $L_{ref}(t = t_1)$ entspricht dabei der Lastgröße, die zu dem Zeitschritt $t = t_1$ erwartungsgemäß auftritt, und kann über die Gewichtskraft berechnet werden.

Die Referenzlastgröße $L_{ref}$ ist z.B. ein Biegemoment $M_x$ in Schlagrichtung $x$, ein Biegemoment $M_y$ in Schwenkrichtung y oder eine axiale Kraft $F_z$ in Längsrichtung z. Im Referenzlastgrößen-Bestimmungsschritt 423 können aber auch mehrere Referenzlastgrößen bestimmt werden.

Im Speicherschritt 430 wird die Referenzlastgröße $L_{ref}(t = t_1)$ in einem Ausgangsvektor $L_{ref}$ abgespeichert. Ebenso wird der Sensorgrößensatz, also die Sensorgrößen $x_1 (t = t_1)$, $x_2(t = t_1)$, $x_3(t = t_1)$ in einer Messmatrix $A$ abgespeichert.

Sobald genügend Daten abgespeichert wurden, besonders nach einer vorbestimmten Anzahl von Wiederholungen, wird mit einem Parametrierschritt 440 weiterverfahren. Andernfalls wird im nächsten Zeitschritt ein weiterer Erfassungsschritt 420 durchgeführt. Dabei wird mit jedem neuen Erfassungsschritt eine Betriebssituation der Windenergieanlage variiert. Durch die Veränderung der Betriebssituation soll sich die zu bestimmende Referenzlastgröße ändern. Insbesondere kann das bedeuten, dass sich der Rotor weitergedreht hat. Durch die Drehung des Rotors führt die Gravitationskraft zu einer veränderten Dehnung des Rotorblatts im Bereich der Lastsensoren. Somit ändert sich auch die Referenzlastgröße $L_{ref}$.

Die Betriebssituation kann aber auch dadurch variiert werden, dass z.B. ein Blattwinkel des Rotorblattes verändert wird.

Weiterhin kann auch eine Betriebseinstellung verändert werden. Durch die Veränderung der Betriebseinstellung soll sich ebenfalls die Referenzlastgröße ändern. Allerdings muss die Betriebseinstellung nicht nach jedem Erfassungsschritt 420 variiert werden, sondern kann für mehrere Erfassungsschritte 420 beibehalten werden. Somit stellt z.B. das Weiterdrehen des Rotors keine veränderte Betriebseinstellung dar, führt aber zu einer veränderten Betriebssituation. Die Betriebseinstellung kann aber durch Variation des Blattwinkels verändert werden.

Im Erfassungsschritt 420 werden dann wiederholt der Sensorgrößensatz und die Referenzlast bei veränderter Betriebssituation erfasst. Das erfolgt im Sensorgrößensatz-Bestimmungsschritt 421 und im Referenzlastgrößen-Bestimmungsschritt 423. Ggf. können Betriebseinstellungen auch verändert werden. Die so erfassten Größen werden im Speicherschritt 430 in der jeweils nächsten Zeile des Ausgansvektors bzw. der Messmatrix abgespeichert.

Nach p Erfassungsschritten 420 und Speicherschritten 430 liegt somit eine Messmatrix

$$A = \begin{pmatrix} x_1(t=t_1) & x_2(t=t_1) & x_3(t=t_1) & 1 \\ x_1(t=t_2) & x_2(t=t_2) & x_3(t=t_2) & 1 \\ \cdots & \cdots & \cdots & 1 \\ x_1(t=t_p) & x_2(t=t_p) & x_3(t=t_p) & 1 \end{pmatrix}$$

vor, sowie ein Ausgangsvektor

$$\vec{L}_{ref} = \begin{pmatrix} L_{ref}(t=t_1) \\ L_{ref}(t=t_2) \\ \cdots \\ L_{ref}(t=t_p) \end{pmatrix}.$$

Dabei wird bevorzugt ein Ablaufplan zugrunde gelegt, sodass im Speicherschritt 430 gerade dann genügend Daten abgespeichert wurden, wenn der Ablaufplan beendet ist. Im Ablaufplan kann somit die Anzahl $p$ der Erfassungsschritte vorgegeben werden.

Es kann z.B. gemäß Ablaufplan vorgegeben werden, nach jeder Rotordrehung um 1° einen Erfassungsschritt 420 durchzuführen und nach zwei vollen Umdrehungen den Blattwinkel zu verändern, wobei z.B. drei verschiedene Blattwinkel vermessen werden. Die Anzahl $p$ der Erfassungsschritte wäre in diesem Fall 2*3*360=2160.

Ist der Ablaufplan beendet, wird im Parametrierschritt 440 die Sensoranordnung parametriert, indem die Berechnungsparameter bestimmt werden.

Dabei werden die Berechnungsparameter unter gleichzeitiger Berücksichtigung aller während der Parametrierung erfassten Sensorgrößen anhand der Messmatrix A bestimmt. In nur einem Rechenschritt wird dazu der Parametervektor $\vec{k}$, der die Berechnungsparameter aufweist, bestimmt über

$$\vec{k} = (A^T \cdot A)^{-1} \cdot A^T \cdot \vec{L}_{ref}.$$

Im anschließenden Abschlussschritt 450 werden die Berechnungsparameter abgespeichert und die Parametrierung beendet.

Wird die Sensoranordnung für ein Biegemoment $M_x$ in Schlagrichtung $x$ parametriert, so werden entsprechend die Berechnungsparameter $k_{x,1}$, $k_{x,2}$, $k_{x,3}$, $k_{x,0}$ bestimmt und abgespeichert.

Nach erfolgter Parametrierung kann die Sensoranordnung dazu verwendet werden, Lastgrößen zu berechnen. Wurde also die Parametrierung für das Biegemoment $M_x$ durchgeführt, erfolgt die Berechnung anhand der Gesamtberechnungsvorschrift

$$M_x = k_{x,1} \cdot x_1 + k_{x,2} \cdot x_2 + k_{x,3} \cdot x_3 + k_{x,0}.$$

Zur Sicherstellung möglichst genau bestimmter Berechnungsparameter wird das Verfahren 400 zum Parametrieren der Sensoranordnung 310 nach einer vorbestimmten Zeit, z.B. alle drei Monate, wiederholt.

Erfindungsgemäß wurde besonders auch das Folgende erkannt und es wird das Folgende vorgeschlagen.

Es wird also ein Verfahren zur Parametrierung einer Sensoranordnung einer Windenergieanlage vorgeschlagen, wobei die Sensoranordnung an einem Rotorblatt der Windenergieanlage angeordnet ist und aus mindestens drei Lastsensoren besteht.

Die Parametrierung erfolgt dabei vorzugsweise in einem zweistufigen Verfahren, bestehend aus einem Ablaufplan oder Parametrierroutine und einem Parametrierschritt.

Das Ziel der Parametrierroutine ist es, bei unterschiedlichen Biegemomenten am Rotorblatt jeweils Messwerte der Lastsensoren sowie jeweils ein dazugehöriges berechnetes Referenzbiegemoment zu erfassen und abzuspeichern. Dafür wird die Windenergieanlage in einem Betrieb betrieben, in dem ein am Rotorblatt anliegendes Biegemoment mit einer hohen Genauigkeit berechnet werden kann.

Besonders wird vorgeschlagen, für die Parametrierroutine die Windenergieanlage in einem Trudelbetrieb zu betreiben und dem Rotorblatt variierende Blattwinkel vorzugeben, sodass das Referenzbiegemoment näherungsweise einem Eigenmoment entspricht.

Damit die aerodynamischen Kräfte vernachlässigbar klein sind, wird die Parametrierung der Sensoranordnung bevorzugt bei geringen Windgeschwindigkeiten ausgeführt. Andererseits muss der Wind stark genug sein, um die Parametrierung in einer akzeptablen Zeit durchzuführen. Die konkreten Windgeschwindigkeiten, bei denen eine solche Parametrierung durchgeführt wird, sind abhängig von der Startwindgeschwindigkeit der Windenergieanlage am jeweiligen Standort. Wenn diese Bedingungen nicht gegeben sind, besonders wenn der Wind stärker ist als bei guten Bedingungen, aber eine Parametrierung nötig ist, so wird trotzdem parametriert und später bei guten Bedingungen die Parametrierung wiederholt.

Alternativ könnten die aerodynamischen Kräfte und Momente zusätzlich berücksichtigt werden, um auch bei viel Wind eine genaue Parametrierung der Sensoranordnung zu ermöglichen.

Nachdem die Parametrierroutine abgeschlossen ist, wird der Parametrierschritt ausgeführt. Der Parametrierschritt dient der Berechnung der Berechnungsparameter. Nach Abschluss der Parametrierroutine werden aus den aufgezeichneten Sensorgrößen und den Referenzbiegemomenten die Berechnungsparameter berechnet, sodass der mittlere quadratische Fehler zwischen den Referenzbiegemomenten und den aus den Berechnungsparametern und den Sensorgrößen berechneten Biegemomenten minimal ist.

Dabei wird angenommen, dass die Biegemomente proportional zur Dehnung des Rotorblattes sind. Tatsächlich tritt ab einer gewissen Dehnung eine Nichtlinearität auf. Die Abweichung von der Linearität kann bei Bedarf invers in der Parametrierroutine oder im Parametrierschritt berücksichtigt werden.

**Patentansprüche**

1. Verfahren zum Parametrieren einer Sensoranordnung aus mehreren Lastsensoren eines Rotorblattes (208) eines Rotors (106) einer Windenergieanlage (100) zum Erfassen wenigstens einer Lastgröße, die für eine Last repräsentativ ist, die auf das Rotorblatt (208) wirkt, wobei

   - das Rotorblatt (208) wenigstens drei Lastsensoren (211, 213, 215) aufweist,
   - jeder der Lastsensoren (211, 213, 215) eine von der Last abhängige physikalische Größe des Rotorblattes (208) aufnimmt und eine dazu repräsentative Größe als erfasste Sensorgröße ausgibt,
   - zum Berechnen der wenigstens einen Lastgröße aus den Sensorgrößen wenigstens eine Gesamtberechnungsvorschrift verwendet wird, die einen Zusammenhang zwischen den erfassten Sensorgrößen aller Lastsensoren (211, 213, 215) und der wenigstens einen Lastgröße des Rotorblattes (208) bildet, und mehrere Berechnungsparameter aufweist, und
   - zum Parametrieren der Sensoranordnung (210) die Berechnungsparameter der Gesamtberechnungsvorschrift unter gleichzeitiger Berücksichtigung von erfassten Sensorgrößen aller Lastsensoren (211, 213, 215) bestimmt werden.

2. Verfahren nach Anspruch 1, **dadurch gekennzeichnet, dass**

   - zum Bestimmen der Berechnungsparameter keine einzelne Parametrierung einzelner Lastsensoren (211, 213, 215) erfolgt, insbesondere keine einzelne Kalibrierung und/oder Justierung einzelner Lastsensoren (211, 213, 215) erfolgt.

3. Verfahren nach Anspruch 1 oder 2, **dadurch gekennzeichnet, dass**

   - die Sensorgrößen sukzessive in mehreren Erfassungsschritten (420) bei variierenden Betriebssituationen der Windenergieanlage (100) erfasst werden, wobei
   - in jedem Erfassungsschritt (420)

     - jeweils eine Sensorgröße für jeden Lastsensor (211, 213, 215) erfasst wird, sodass in dem Erfassungsschritt (420) mehrere Sensorgrößen erfasst werden, die einen Sensorgrößensatz bilden, und
     - zu dem Sensorgrößensatz wenigstens eine zugehörige Lastgröße als Referenzlastgröße ermittelt wird, insbesondere berechnet wird,
     - die Erfassungsschritte (420) jeweils mit einer veränderten Betriebssituation wiederholt werden, insbesondere wenigstens so oft, wie die Gesamtberechnungsvorschrift zu bestimmende Berechnungsparameter aufweist, insbesondere wenigstens einmal öfter, und

   - die Berechnungsparameter in Abhängigkeit von allen in den Erfassungsschritten erfassten Sensorgrößen und ermittelten zugehörigen Lastgrößen bestimmt werden.

4. Verfahren nach einem der vorstehenden Ansprüche, **dadurch gekennzeichnet, dass**

- die Gesamtberechnungsvorschrift eine Berechnungsgleichung aufweist oder ist, die mittels der Berechnungsparameter einen Zusammenhang zwischen der Lastgröße und den Sensorgrößen beschreibt, wobei zur Bestimmung der Berechnungsparameter
- ein Gleichungssystem aus mehreren Berechnungsgleichungen aufgestellt wird,
- für jede Berechnungsgleichung des Gleichungssystems

- für die Lastgröße eine ermittelte Referenzlastgröße eingesetzt wird, und
- für die Sensorgrößen zur ermittelten Referenzlastgröße zugehörige erfasste Sensorgrößen eingesetzt werden, und

- das Gleichungssystem nach den Berechnungsparametern aufgelöst wird, wobei insbesondere

- mehr Berechnungsgleichungen aufgestellt werden, als die Gesamtberechnungsvorschrift Berechnungsparameter aufweist, sodass das Gleichungssystem überbestimmt ist, und insbesondere das Gleichungssystem so gelöst wird, dass sich eine statistisch optimale Lösung ergibt.

5. Verfahren nach einem der vorstehenden Ansprüche, **dadurch gekennzeichnet, dass**

- ein bzw. das Gleichungssystem aus mehreren Berechnungsgleichungen der Gesamtberechnungsvorschrift in Matrixform aufgestellt wird, mit

- einem Ausgangsvektor für die ermittelten Referenzlastgrößen,
- einer Messmatrix für die erfassten Sensorgrößen und
- einem Parametervektor für die zu bestimmenden Berechnungsparameter, sodass
- der Ausgangsvektor gleich einem Produkt der Messmatrix mit dem Parametervektor ist, wobei insbesondere

- für das Gleichungssystem mittels Bildung einer Pseudoinversen der Messmatrix eine Näherungslösung gefunden wird, und/oder

- der Parametervektor einen bzw. den Offset aufweist, und die Messmatrix eine zum Offset korrespondierende zusätzliche Spalte aufweist, die mit dem Wert 1 gefüllt ist, sodass bei der Multiplikation der Messmatrix mit dem Parametervektor der Offset jeweils mit dem Wert 1 multipliziert wird.

6. Verfahren nach einem der vorstehenden Ansprüche, **dadurch gekennzeichnet, dass**

- die Berechnungsparameter einen Offset $k_0$ umfassen,
- jedem Lastsensor (211, 213, 215) wenigstens ein Berechnungsparameter $k_i$ zugeordnet wird, und
- sich die Gesamtberechnungsvorschrift ergibt, indem
- für jeden der Lastsensoren (211, 213, 215) ein Produkt aus Sensorgröße $x_i$ des jeweiligen Lastsensors $i$ mit dem zum Lastsensor zugehörigen wenigstens einen Berechnungsparameter $k_i$ gebildet wird, und
- sich die Lastgröße $L$ ergibt als Summe der Produkte $k_i \cdot x_i$ und dem Offset $k_0$ nach der Formel:

$$L = \sum_{i=1}^{n} k_i \cdot x_i + k_0.$$

7. Verfahren nach einem der vorstehenden Ansprüche, **dadurch gekennzeichnet, dass**

- zur sukzessiven Erfassung der Sensorgrößen bei variierenden Betriebssituationen,
- die Betriebssituationen so gewählt werden, dass sich unterschiedliche Lastgrößen, insbesondere unterschiedliche Biegemomente, am Rotorblatt (208) einstellen, und insbesondere

- die Biegemomente aus einem Eigengewicht des Rotorblatts (208) resultieren, und
- die Biegemomente dadurch variiert werden, dass der Rotor (106) in seiner Drehposition verändert wird, und/oder ein Blattwinkel des Rotorblattes verändert wird.

8. Verfahren nach einem der vorstehenden Ansprüche, **dadurch gekennzeichnet, dass**

- zur sukzessiven Erfassung der Sensorgrößen bei variierenden Betriebssituationen in Erfassungsschritten (420),
- den Erfassungsschritten (420) ein Ablaufplan vorgegeben wird, sodass
- die variierenden Betriebssituationen gemäß dem Ablaufplan eingestellt werden, und
- das Parametrieren der Sensoranordnung nach Beendung des Ablaufplans durchgeführt wird.

9. Verfahren nach einem der vorstehenden Ansprüche, **dadurch gekennzeichnet, dass** zum Erfassen der Sensorgrößen wenigstens eine Betriebseinstellung vorgesehen ist aus der Liste aufweisend

- die Windenergieanlage (100) wird in einem Trudelbetrieb betrieben,
- ein Blattwinkel des Rotorblattes (208) wird eingestellt,
- eine Leistung wird eingestellt,
- ein Drehmoment eines mit dem Rotor (106) verbundenen Generators wird eingestellt, und
- eine Drehzahl des Rotors (106) wird eingestellt, wobei
- zum Erfassen der Sensorgrößen wenigstens eine der Betriebseinstellungen variiert wird, und insbesondere
- jede Betriebseinstellung für eine vorbestimmte Testdauer beibehalten wird, insbesondere für mehrere Erfassungsschritte (420) beibehalten wird, und/oder
- wenigstens eine Betriebseinstellung so lange beibehalten wird, dass jeweils mehrere Betriebssituationen durchlaufen werden, zu denen jeweils ein Erfassungsschritt (420) zum Erfassen der Sensorgrößen durchgeführt wird.

10. Verfahren nach einem der vorstehenden Ansprüche, **dadurch gekennzeichnet, dass**

- das Erfassen der Sensorgrößen zum Parametrieren der Sensoranordnung bei Windgeschwindigkeiten in einem ersten Windgeschwindigkeitsbereich und einem zweiten Windgeschwindigkeitsbereich erfolgt, wobei

- der erste Windgeschwindigkeitsbereich zwischen einer Anlaufwindgeschwindigkeit und einer ersten Windgeschwindigkeit liegt, die größer als die Anlaufwindgeschwindigkeit ist,
- der zweite Windgeschwindigkeitsbereich zwischen der ersten Windgeschwindigkeit und einer zweiten Windgeschwindigkeit liegt, die größer als die erste Windgeschwindigkeit ist, und insbesondere
- das Erfassen bei Windgeschwindigkeiten im ersten Windgeschwindigkeitsbereich wiederholt wird, wenn das Erfassen zuvor bei Windgeschwindigkeiten im zweiten Windgeschwindigkeitsbereich erfolgt ist.

11. Verfahren nach einem der vorstehenden Ansprüche, **dadurch gekennzeichnet, dass**

- die Sensoranordnung zum Erfassen von wenigsten zwei Lastgrößen eingerichtet ist, wobei
- für jede Lastgröße eine eigene Gesamtberechnungsvorschrift mit eigenen Berechnungsparametern vorgesehen ist, und insbesondere

- eine der Lastgrößen ein Blattbiegemoment des Rotorblattes (108) in eine erste Richtung ist, insbesondere in eine Schlagrichtung, und
- eine der Lastgrößen ein Blattbiegemoment des Rotorblattes (108) in eine zweite Richtung ist, insbesondere in eine Schwenkrichtung, und optional
- eine der Lastgrößen eine axiale Kraft des Rotorblattes (108) ist, und wobei
- für jede Lastgröße

- eine eigene Gesamtberechnungsvorschrift verwendet wird, mit eigenen Berechnungsparametern, um die jeweilige Lastgröße aus den Sensorgrößen zu berechnen und
- die Berechnungsparameter jeder Gesamtberechnungsvorschrift jeweils unter gleichzeitiger Berücksichtigung von erfassten Sensorgrößen aller Lastsensoren bestimmt werden,
- vorzugsweise unter Verwendung derselben erfassten Sensorgrößen, wobei insbesondere

- zum Bestimmen der Berechnungsparameter

- eine Messmatrix aus erfassten Sensorgrößen für alle Gesamtberechnungsvorschriften gemeinsam aufgenommen und verwendet wird, aber
- für jede Gesamtberechnungsvorschrift ein eigener Ausgangsvektor aus ermittelten Referenzlastgrößen verwendet wird.

12. Verfahren nach einem der vorstehenden Ansprüche, **dadurch gekennzeichnet, dass** in jedem Erfassungsschritt (420) für jeden Lastsensor (211, 213, 215) eine oder die Referenzlastgröße berechnet wird in Abhängigkeit von einer Gravitationskraft, die auf das Rotorblatt wirkt, wobei insbesondere

- die Gravitationskraft in ein Koordinatensystem des Rotorblattes umgerechnet wird unter Berücksichtigung eines Blattwinkels des Rotorblattes (208), einer Drehposition des Rotors (106), eines Neigungswinkels des Rotors (106) gegenüber einer Horizontalen, und/oder eines Neigungswinkels des Rotorblattes (208) gegenüber einer Rotationsebene des Rotors (106).

13. Verfahren nach einem der vorstehenden Ansprüche, **dadurch gekennzeichnet, dass**

- zur sukzessiven Erfassung der Sensorgrößen bei variierenden Betriebssituationen in Erfassungsschritten (420) die Referenzlastgröße in jedem Erfassungsschritt (420) zusätzlich in Abhängigkeit von auftretenden aerodynamischen Kräften und/oder auftretenden aerodynamischen Momenten, die auf das Rotorblatt (208) wirken, ermittelt wird.

14. Verfahren nach einem der vorstehenden Ansprüche, **dadurch gekennzeichnet, dass**

- ein nichtlinearer Zusammenhang zwischen den Sensorgrößen und der Lastgröße berücksichtigt wird, indem
- die Berechnungsparameter einen oder den Offset $k_0$ umfassen,
- jedem Lastsensor (211, 213, 215) insgesamt m Berechnungsparameter $k_{i,j}$ zugeordnet werden, wobei m größer als eins ist, und
- sich die Gesamtberechnungsvorschrift bei n Lastsensoren für die Lastgröße L ergibt als

$$L = \sum_{i=1}^{n} \left( \sum_{j=1}^{m} k_{i,j} \cdot x_i^j \right) + k_0.$$

15. Windenergieanlange (100) mit einer Sensoranordnung aus mehreren Lastsensoren (211, 213, 215) eines Rotorblattes (208) eines Rotors (106) der Windenergieanlage (100) zum Erfassen wenigstens einer Lastgröße, die für eine Last repräsentativ ist, die auf das Rotorblatt (208) wirkt, wobei

- das Rotorblatt (208) wenigstens drei Lastsensoren (211, 213, 215) aufweist,
- jeder der Lastsensoren (211, 213, 215) eine von der Last abhängige physikalische Größe des Rotorblattes (208) aufnimmt und eine dazu repräsentative Größe als erfasste Sensorgröße ausgibt,
- die Windenergieanlage (100) eine Steuereinrichtung, insbesondere Parametriereinheit aufweist, und
- die Steuereinrichtung dazu eingerichtet ist, die Sensoranordnung gemäß einem Verfahren nach einem der Ansprüche 1 - 14 zu parametrieren.

**Claims**

1. A method for parameterizing a sensor arrangement comprising multiple load sensors of a rotor blade (208) of a rotor (106) of a wind power installation (100) for acquiring at least one load variable, which is representative of a load that acts on the rotor blade (208), wherein

- the rotor blade (208) has at least three load sensors (211, 213, 215),
- each of the load sensors (211, 213, 215) records a load-dependent physical variable of the rotor blade (208) and outputs a variable representative thereof as the acquired sensor variable,
- for calculating the at least one load variable from the sensor variables, at least one overall calculation rule is used, forming a relationship between the acquired sensor variables of all the load sensors (211, 213, 215) and the at least one load variable of the rotor blade (208), and having multiple calculation parameters, and,

- for parameterizing the sensor arrangement (210), the calculation parameters of the overall calculation rule are determined while at the same time taking into consideration acquired sensor variables of all the load sensors (211, 213, 215).

2. The method as claimed in claim 1, **characterized in that**

- no individual parameterization of individual load sensors (211, 213, 215) takes place for determining the calculation parameters, in particular no individual calibration and/or adjustment of individual load sensors (211, 213, 215) takes place.

3. The method as claimed in claim 1 or 2, **characterized in that**

- the sensor variables are successively acquired in multiple acquisition steps (420) in varying operational situations of the wind power installation (100), wherein
- in each acquisition step (420)

- a sensor variable is respectively acquired for each load sensor (211, 213, 215), so that multiple sensor variables are acquired in the acquisition step (420), forming a set of sensor variables, and
- at least one associated load variable is ascertained, in particular is calculated, for the set of sensor variables as a reference load variable,
- the acquisition steps (420) are respectively repeated with a changed operational situation, in particular at least as often as the overall calculation rule has calculation parameters to be determined, in particular at least once more often, and

- the calculation parameters are determined in dependence on all the sensor variables acquired in the acquisition steps and ascertained associated load variables.

4. The method as claimed in one of the preceding claims, **characterized in that**

- the overall calculation rule has or is a calculation equation, which describes by means of the calculation parameters a relationship between the load variable and the sensor variables, wherein, for determining the calculation parameters,
- a system of equations comprising multiple calculation equations is set up,
- for each calculation equation of the system of equations

- an ascertained reference load variable is used for the load variable, and
- acquired sensor variables associated with the ascertained reference load variable are used for the sensor variables, and

- the system of equations is resolved on the basis of the calculation parameters, wherein in particular

- more calculation equations are set up than the overall calculation rule has calculation parameters, so that the system of equations is overdetermined, and in particular the system of equations is resolved such that a statistically optimal solution is obtained.

5. The method as claimed in one of the preceding claims, **characterized in that**

- a or the system of equations comprising multiple calculation equations of the overall calculation rule is set up in matrix form, with

- an output vector for the ascertained reference load variables,
- a measurement matrix for the acquired sensor variables and
- a parameter vector for the calculation parameters to be determined such that
- the output vector is equal to a product of the measurement matrix times the parameter vector, wherein in particular

- an approximation solution for the system of equations is found by means of forming a pseudoinverse of the measurement matrix, and/or

- the parameter vector has an or the offset, and the measurement matrix has an additional column corresponding to the offset, which is filled with the value 1, so that, in the multiplication of the measurement matrix by the parameter vector, the offset is respectively multiplied by the value 1.

6. The method as claimed in one of the preceding claims, **characterized in that**

- the calculation parameters comprise an offset $k_0$,
- each load sensor (211, 213, 215) is assigned at least one calculation parameter $k_i$, and
- the overall calculation rule is obtained **in that**

- for each of the load sensors (211, 213, 215), a product of the sensor variable $x_i$ of the respective load sensor $i$ times the at least one calculation parameter $k_i$ associated with the load sensor is formed, and
- the load variable $L$ is obtained as the sum of the products $k_i \cdot x_i$ and the offset $k_0$ on the basis of the formula:

$$L = \sum_{i=1}^{n} k_i \cdot x_i + k_0.$$

7. The method as claimed in one of the preceding claims, **characterized in that**

- for the successive acquisition of the sensor variables in varying operational situations,
- the operational situations are chosen such that different load variables, in particular different bending moments, occur at the rotor blade (208), and in particular

- the bending moments result from a dead weight of the rotor blade (208), and
- the bending moments are varied by the rotor (106) being changed in its rotational position, and/or a blade angle of the rotor blade being changed.

8. The method as claimed in one of the preceding claims, **characterized in that**

- for the successive acquisition of the sensor variables in varying operational situations in acquisition steps (420),
- a schedule is prescribed for the acquisition steps (420), so that
- the varying operational situations are set according to the schedule, and
- the parameterizing of the sensor arrangement is carried out after ending of the schedule.

9. The method as claimed in one of the preceding claims, **characterized in that**, for acquiring the sensor variables, at least one operational setting is provided from the list comprising

- the wind power installation (100) is operated in an idling mode,
- a blade angle of the rotor blade (208) is set,
- a power output is set,
- a torque of a generator connected to the rotor (106) is set, and
- a rotational speed of the rotor (106) is set, wherein
- for acquiring the sensor variables, at least one of the operational settings is varied, and in particular
- each operational setting is retained for a predetermined test period, in particular for multiple acquisition steps (420) and/or
- at least one operational setting is retained until multiple operational situations are in each case enacted, with an acquisition step (420) for acquiring the sensor variables being respectively carried out.

10. The method as claimed in one of the preceding claims, **characterized in that**

- the acquisition of the sensor variables for parameterizing the sensor arrangement takes place at wind speeds in a first wind speed range and a second wind speed range, wherein

- the first wind speed range lies between a start-up wind speed and a first wind speed, which is greater than the start-up wind speed,
- the second wind speed range lies between the first wind speed and a second wind speed, which is greater than the first wind speed, and in particular
- the acquisition is repeated at wind speeds in the first wind speed range if the acquisition previously took place at wind speeds in the second wind speed range.

11. The method as claimed in one of the preceding claims, **characterized in that**

- the sensor arrangement is set up for acquiring at least two load variables, wherein
- a dedicated overall calculation rule with dedicated calculation parameters is provided for each load variable, and in particular

- one of the load variables is a blade bending moment of the rotor blade (108) in a first direction, in particular in a flapwise direction, and
- one of the load variables is a blade bending moment of the rotor blade (108) in a second direction, in particular in an edgewise direction, and optionally
- one of the load variables is an axial force of the rotor blade (108), and wherein,
- for each load variable,

- a dedicated overall calculation rule, with dedicated calculation parameters, is used, in order to calculate the respective load variable from the sensor variables, and
- the calculation parameters of each overall calculation rule are respectively determined while at the same time taking acquired sensor variables of all the load sensors into consideration,
- preferably using the same acquired sensor variables, wherein in particular

- for determining the calculation parameters

- a measurement matrix comprising acquired sensor variables for all the overall calculation rules together is recorded and used, but
- a dedicated output vector comprising ascertained reference load variables is used for each overall calculation rule.

12. The method as claimed in one of the preceding claims, **characterized in that** in each acquisition step (420) a or the reference load variable is calculated in dependence on a gravitational force that is acting on the rotor blade for each load sensor (211, 213, 215), wherein in particular

- the gravitational force is converted into a coordinate system of the rotor blade while taking into consideration a blade angle of the rotor blade (208), a rotational position of the rotor (106), an angle of inclination of the rotor (106) with respect to a horizontal, and/or an angle of inclination of the rotor blade (208) with respect to a rotational plane of the rotor (106).

13. The method as claimed in one of the preceding claims, **characterized in that**

- for the successive acquisition of the sensor variables in varying operational situations in acquisition steps (420), the reference load variable is additionally ascertained in each acquisition step (420) in dependence on aerodynamic forces occurring and/or aerodynamic moments occurring, which act on the rotor blade (208).

14. The method as claimed in one of the preceding claims, **characterized in that**

- a non-linear relationship between the sensor variables and the load variable is taken into consideration **in that**
- the calculation parameters comprise a or the offset $k_0$,
- altogether m calculation parameters $k_{i,j}$ are assigned to each load sensor (211, 213, 215), where m is greater than one, and
- the overall calculation rule in the case of n load sensors for the load variable $L$ is obtained as

$$L = \sum_{i=1}^{n} \left( \sum_{j=1}^{m} k_{i,j} \cdot x_i^j \right) + k_0.$$

**15.** A wind power installation (100), with a sensor arrangement comprising multiple load sensors (211, 213, 215) of a rotor blade (208) of a rotor (106) of the wind power installation (100) for acquiring at least one load variable, which is representative of a load that acts on the rotor blade (208), wherein

- the rotor blade (208) has at least three load sensors (211, 213, 215),
- each of the load sensors (211, 213, 215) records a load-dependent physical variable of the rotor blade (208) and outputs a variable representative thereof as the acquired sensor variable,
- the wind power installation (100) has a control device, in particular a parameterizing unit, and
- the control device is set up to parameterize the sensor arrangement according to a method as claimed in one of claims 1 - 14.

**Revendications**

1. Procédé de paramétrage d'un ensemble de capteurs composé de plusieurs capteurs de charge d'une pale de rotor (208) d'un rotor (106) d'une éolienne (100) pour acquérir au moins une grandeur de charge qui est représentative d'une charge qui agit sur la pale de rotor (208), dans lequel

- la pale de rotor (208) présente au moins trois capteurs de charge (211, 213, 215),
- chacun des capteurs de charge (211, 213, 215) reçoit une grandeur physique de la pale de rotor (208) dépendante de la charge et délivre une grandeur représentative de celle-ci en tant que grandeur de capteur acquise,
- pour calculer l'au moins une grandeur de charge à partir des grandeurs de capteur au moins une règle de calcul globale est utilisée, qui forme une relation entre les grandeurs de capteur acquises de tous les capteurs de charge (211, 213, 215) et l'au moins une grandeur de charge de la pale de rotor (208), et qui présente plusieurs paramètres de calcul, et
- pour paramétrer l'ensemble de capteurs (210), les paramètres de calcul de la règle de calcul globale sont déterminés en tenant simultanément compte de grandeurs de capteur acquises de tous les capteurs de charge (211, 213, 215).

2. Procédé selon la revendication 1, **caractérisé en ce que**

- aucun paramétrage individuel de capteurs de charge (211, 213, 215) individuels n'est effectué pour déterminer les paramètres de calcul, en particulier aucun étalonnage et/ou ajustement individuel de capteurs de charge (211, 213, 215) individuels n'est effectué.

3. Procédé selon la revendication 1 ou 2, **caractérisé en ce que**

- les grandeurs de capteur sont successivement acquises en plusieurs étapes d'acquisition (420) dans des situations de fonctionnement variables de l'éolienne (100), dans lequel
- à chaque étape d'acquisition (420)
- une grandeur de capteur est respectivement acquise pour chaque capteur de charge (211, 213, 215) de sorte que plusieurs grandeurs de capteur, qui forment un jeu de grandeurs de capteur, sont acquises à l'étape d'acquisition (420), et
- au moins une grandeur de charge associée au jeu de grandeurs de capteur est établie, en particulier calculée, comme grandeur de charge de référence,
- les étapes d'acquisition (420) sont répétées à chaque fois avec une situation de fonctionnement modifiée, en particulier au moins aussi souvent que la règle de calcul globale présente des paramètres de calcul à déterminer, en particulier au moins une fois de plus, et
- les paramètres de calcul sont déterminés en fonction de toutes les grandeurs de capteur acquises aux étapes d'acquisition et des grandeurs de charge associées établies.

4. Procédé selon l'une quelconque des revendications précédentes, **caractérisé en ce que**

- la règle de calcul globale présente ou est une équation de calcul qui décrit, au moyen des paramètres de calcul, une relation entre la grandeur de charge et les grandeurs de capteur, dans lequel, pour déterminer les paramètres de calcul,
- un système d'équations composé de plusieurs équations de calcul est mis en place,

- pour chaque équation de calcul du système d'équations
- une grandeur de charge de référence établie est utilisée pour la grandeur de charge, et
- pour les grandeurs de capteur, des grandeurs de capteur acquises associées à la grandeur de charge de référence établie sont utilisées, et
- le système d'équations est résolu en fonction des paramètres de calcul, dans lequel en particulier
- plus d'équations de calcul sont mises en place que la règle de calcul globale ne présente de paramètres de calcul, de sorte que le système d'équations est surdéterminé, et en particulier le système d'équations est résolu de sorte qu'une solution statistiquement optimale est obtenue.

**5.** Procédé selon l'une quelconque des revendications précédentes, **caractérisé en ce que**

- un ou le système d'équations est mis en place à partir de plusieurs équations de calcul de la règle de calcul globale sous forme de matrice, avec
- un vecteur de sortie pour les grandeurs de charge de référence établies,
- une matrice de mesure pour les grandeurs de capteur acquises et
- un vecteur de paramètre pour les paramètres de calcul à déterminer, de sorte que
- le vecteur de sortie est égal à un produit de la matrice de mesure par le vecteur de paramètre, dans lequel en particulier
- une solution d'approximation est trouvée pour le système d'équations par formation d'une pseudo-inversion de la matrice de mesure, et/ou
- le vecteur de paramètre présente un ou le décalage, et la matrice de mesure présente une colonne supplémentaire correspondant au décalage, qui est remplie de la valeur 1, de sorte que, lors de la multiplication de la matrice de mesure par le vecteur de paramètre, le décalage est systématiquement multiplié par la valeur 1.

**6.** Procédé selon l'une quelconque des revendications précédentes, **caractérisé en ce que**

- les paramètres de calcul comprennent un décalage $k_0$,
- au moins un paramètre de calcul $k_i$ est attribué à chaque capteur de charge (211, 213, 215), et
- la règle de calcul globale est obtenue du fait que
- pour chacun des capteurs de charge (211, 213, 215), un produit de la grandeur de capteur $x_i$ du capteur de charge $i$ respectif avec l'au moins un paramètre de calcul $k_i$ associé au capteur de charge est formé, et
- la grandeur de charge L est obtenue en tant que somme des produits $k_i \cdot x_i$ et du décalage $k_0$ selon la formule :

$$L = \sum_{i=1}^{n} k_i \cdot x_i + k_0 \, .$$

**7.** Procédé selon l'une quelconque des revendications précédentes, **caractérisé en ce que**

- pour l'acquisition successive des grandeurs de capteur dans des situations de fonctionnement variables,
- les situations de fonctionnement sont choisies de sorte que différentes grandeurs de charge, en particulier différents moments de flexion, apparaissent sur la pale de rotor (208), et en particulier
- les moments de flexion résultent du poids propre de la pale de rotor (208), et
- les moments de flexion varient par le fait que la position de rotation du rotor (106) est modifiée et/ou un angle de pale de la pale de rotor est modifié.

**8.** Procédé selon l'une quelconque des revendications précédentes, **caractérisé en ce que**

- pour l'acquisition successive des grandeurs de capteur dans des situations de fonctionnement variables par étapes d'acquisition (420),
- un plan de déroulement est indiqué aux étapes d'acquisition (420) de sorte que
- les situations de fonctionnement variables sont réglées conformément au plan de déroulement, et
- le paramétrage de l'ensemble de capteurs est effectué après la fin du plan de déroulement.

**9.** Procédé selon l'une quelconque des revendications précédentes, **caractérisé en ce que**, pour l'acquisition des grandeurs de capteur, au moins un réglage de fonctionnement est prévu dans la liste présentant :

- l'éolienne (100) fonctionne en mode ralenti,
- un angle de pale de la pale de rotor (208) est réglé,
- une puissance est réglée,
- un couple d'un générateur connecté au rotor (106) est réglé, et
- une vitesse de rotation du rotor (106) est réglée, dans lequel
- au moins l'un des réglages de fonctionnement est varié pour l'acquisition des grandeurs de capteur, et en particulier
- chaque réglage de fonctionnement est maintenu pendant une durée de test prédéterminée, en particulier pendant plusieurs étapes d'acquisition (420), et/ou
- au moins un réglage de fonctionnement est maintenu aussi longtemps que plusieurs situations de fonctionnement sont respectivement parcourues, pour lesquelles une étape d'acquisition (420) est respectivement réalisée pour l'acquisition des grandeurs de capteur.

**10.** Procédé selon l'une quelconque des revendications précédentes, **caractérisé en ce que**

- l'acquisition des grandeurs de capteur pour paramétrer l'ensemble de capteurs s'effectue à des vitesses de vent dans une première plage de vitesses de vent et une deuxième plage de vitesses de vent, dans lequel
- la première plage de vitesses de vent est comprise entre une vitesse de vent de démarrage et une première vitesse de vent qui est supérieure à la vitesse de vent de démarrage,
- la deuxième plage de vitesses de vent est comprise entre la première vitesse de vent et une deuxième vitesse de vent qui est supérieure à la première vitesse de vent, et en particulier
- l'acquisition est répétée à des vitesses de vent dans la première plage de vitesses de vent si l'acquisition a été effectuée auparavant à des vitesses de vent dans la deuxième plage de vitesses de vent.

**11.** Procédé selon l'une quelconque des revendications précédentes, **caractérisé en ce que**

- l'ensemble de capteurs est conçu pour acquérir au moins deux grandeurs de charge, dans lequel
- une règle de calcul globale propre, avec des paramètres de calcul propres, est prévue pour chaque grandeur de charge, et en particulier
- l'une des grandeurs de charge est un moment de flexion de pale de la pale de rotor (108) dans une première direction, en particulier dans une direction d'impact, et
- l'une des grandeurs de charge est un moment de flexion de pale de la pale de rotor (108) dans une deuxième direction, en particulier dans une direction de pivotement, et éventuellement
- l'une des grandeurs de charge est une force axiale de la pale de rotor (108), et dans lequel
- pour chaque grandeur de charge

- une règle de calcul globale propre est utilisée, avec des paramètres de calcul propres, pour calculer la grandeur de charge respective à partir des grandeurs de capteur et
- les paramètres de calcul de chaque règle de calcul globale sont déterminés en tenant simultanément compte des grandeurs de capteur acquises de tous les capteurs de charge,
- de préférence en utilisant les mêmes grandeurs de capteur acquises, dans lequel en particulier

- pour déterminer les paramètres de calcul

- une matrice de mesure composée des grandeurs de capteur acquises est enregistrée et utilisée conjointement pour toutes les règles de calcul globales, mais
- un vecteur de sortie propre, composé des grandeurs de charge de référence établies, est utilisé pour chaque règle de calcul globale.

**12.** Procédé selon l'une quelconque des revendications précédentes, **caractérisé en ce que**, à chaque étape d'acquisition (420) pour chaque capteur de charge (211, 213, 215), une ou la grandeur de charge de référence est calculée en fonction d'une force gravitationnelle qui agit sur la pale de rotor, dans lequel en particulier

- la force gravitationnelle est convertie dans un système de coordonnées de la pale de rotor en tenant compte de l'angle de pale de la pale de rotor (208), d'une position de rotation du rotor (106), d'un angle d'inclinaison du rotor (106) par rapport à l'horizontale, et/ou d'un angle d'inclinaison de la pale de rotor (208) par rapport à un plan de rotation du rotor (106).

**13.** Procédé selon l'une quelconque des revendications précédentes, **caractérisé en ce que**

- pour l'acquisition successive des grandeurs de capteur dans des situations de fonctionnement variables aux étapes d'acquisition (420), la grandeur de charge de référence est également établie, à chaque étape d'acquisition (420), en fonction des forces aérodynamiques s'exerçant et/ou moments aérodynamiques s'exerçant, qui agissent sur la pale de rotor (208).

**14.** Procédé selon l'une quelconque des revendications précédentes, **caractérisé en ce que**

- une relation non linéaire entre les grandeurs de capteur et la grandeur de charge est prise en compte du fait que
- les paramètres de calcul comprennent un ou le décalage $k_0$,
- au total, $m$ paramètres de calcul $k_{i,j}$ sont attribués à chaque capteur de charge (211, 213, 215), dans lequel $m$ est supérieur à un, et
- la règle de calcul globale pour n capteurs de charge pour la grandeur de charge $L$ est obtenue en tant que

$$L = \sum_{i=1}^{n}\left(\sum_{j=1}^{m} k_{i,j} \cdot x_i^j\right) + k_0.$$

**15.** Éolienne (100) avec un ensemble de capteurs, composé de plusieurs capteurs de charge (211, 213, 215) d'une pale de rotor (208) d'un rotor (106) de l'éolienne (100), pour acquérir au moins une grandeur de charge qui est représentative d'une charge qui agit sur la pale de rotor (208), dans laquelle

- la pale de rotor (208) présente au moins trois capteurs de charge (211, 213, 215),
- chacun des capteurs de charge (211, 213, 215) reçoit une grandeur physique de la pale de rotor (208) dépendante de la charge et délivre une grandeur représentative de celle-ci en tant que grandeur de capteur acquise,
- l'éolienne (100) présente un dispositif de commande, en particulier une unité de paramétrage, et
- le dispositif de commande est conçu pour paramétrer l'ensemble de capteurs selon un procédé selon l'une quelconque des revendications 1-14.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3317513 B1
- EP 2431607 A1
- US 2019010923 A1
- EP 3141746 A1